(19) Europäisches Patentamt
European Patent Office
Office européen des brevets

(11) **EP 1 397 915 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **02719684.9**

(22) Anmeldetag: **08.01.2002**

(51) Int Cl.:
***H04N 7/01*** *(2006.01)*

(86) Internationale Anmeldenummer:
**PCT/EP2002/000104**

(87) Internationale Veröffentlichungsnummer:
**WO 2002/058385 (25.07.2002 Gazette 2002/30)**

(54) **VERFAHREN UND VORRICHTUNG ZUR KONVERSION VON VIDEO SIGNALEN**

METHOD AND DEVICE FOR CONVERTING VIDEO SIGNALS

PROCEDE ET DISPOSITIF POUR LA CONVERSION DE SIGNAUX VIDEO

(84) Benannte Vertragsstaaten:
**DE FR GB IT NL**

(30) Priorität: **09.01.2001 DE 10100677**

(43) Veröffentlichungstag der Anmeldung:
**17.03.2004 Patentblatt 2004/12**

(73) Patentinhaber: **Micronas GmbH
79108 Freiburg i. Br. (DE)**

(72) Erfinder: **FRANZEN, Ortwin, Ludger
44225 Dortmund (DE)**

(74) Vertreter: **Bickel, Michael
Westphal - Mussgnug & Partner
Patentanwälte
Mozartstrasse 8
80336 München (DE)**

(56) Entgegenhaltungen:
**DE-A- 19 505 758**

- **BLUME H: "New algorithm for nonlinear vector-based upconversion with center weighted medians" JOURNAL OF ELECTRONIC IMAGING, JULY 1997, SPIE-INT. SOC. OPT. ENG, USA, Bd. 6, Nr. 3, Seiten 368-378, XP000704802 ISSN: 1017-9909 in der Anmeldung erwähnt**
- **FRANZEN O ET AL: "Intermediate image interpolation using polyphase weighted median filters" NONLINEAR IMAGE PROCESSING AND PATTERN ANALYSIS XII, SAN JOSE, CA, USA, 22-23 JAN. 2001, Bd. 4304, Seiten 306-317, XP002217523 Proceedings of the SPIE - The International Society for Optical Engineering, 2001, SPIE-Int. Soc. Opt. Eng, USA ISSN: 0277-786X**

EP 1 397 915 B1

**EP 1 397 915 B1**

**Beschreibung**

Die vorliegende Erfindung betrifft ein Verfahren und eine Vorrichtung zur Konversion von Videosignalen.

Zur optimalen Darstellung von Videosignalen in einem Bild ist ein im zeitlichen und örtlichen Abtastraster an das zur Darstellung der Abbildung verwendete Display oder die zugrundeliegende Multimediaumgebung angepasstes Bildformat erforderlich. Hierzu ist es häufig erforderlich, eine zeitliche und/oder örtliche Konversion zwischen verschiedenen Videoformaten vorzunehmen. Die zeitliche Konversion umfasst dabei insbesondere die Erzeugung von Bildern mit einer Bildfrequenz, die von der Bildfrequenz eines ursprünglichen, zu konvertierenden Videosignal abweicht. Die örtliche Konversion kann insbesondere das Erzeugen von Bildinformationen für Zwischenzeilen eines Halbbildes zur Generierung eines Vollbildes umfassen.

Bei der Entwicklung von Interpolationsverfahren für Bewegtbildsequenzen wird insbesondere auf eine flüssige Bewegungsdarstellung sowie die Vermeidung von Interpolationsartefakten oder Auflösungsverlusten Wert gelegt.

**Stand der Technik**

Zu Verfahren und Vorrichtungen zur Konversion von Videosignalen existiert ein umfangreicher Stand der Technik, der im folgenden zum besseren Verständnis der Erfindung erläutert wird. Aus Gründen der Übersichtlichkeit enthält die Beschreibung nur Verweise auf das jeweilige Dokument in eckigen Klammern. Eine Liste mit vollständigen Angaben der zitierten Dokumente findet sich am Ende der Beschreibung.

Für die zeitliche und/oder örtliche Konversion existiert eine Vielzahl von Algorithmen, die sich im wesentlichen in statische, bewegungsadaptive und bewegungsvektorgestützte Verfahren gliedern lassen, wobei jeweils lineare oder nichtlineare Interpolationstechniken verwendet werden können.

Im Folgenden sollen verschiedene bestehende Verfahren zur örtlichen/zeitlichen Formatkonversion kurz vorgestellt werden. Zunächst wird auf statische und bewegungsadaptive Verfahren eingegangen. Anschließend werden bewegungsvektorgestützte Verfahren betrachtet, die den Ausgangspunkt des erfindungsgemäßen Verfahrens bilden.

Statische und bewegungsadaptive Verfahren

Es existieren mehrere statische bzw. lineare Verfahren zur Formatkonversion, auf die aufgrund der mit vielen dieser Verfahren verbundenen Nachteile, wie z.B. Auflösungsverlust oder Bewegungsverschleifung nur kurz eingegangen werden soll.

Die einfachste Möglichkeit zur zeitlichen Formatkonversion besteht aus einer Bildwiederholung, die jedoch aufgrund der zeitlich nicht korrekten Darstellung von Bewegungen zu einer unbefriedigenden Bewegungswiedergabe mit Mehrfachkonturen oder "ruckenden" Bewegungsabläufen führen. Eine lineare zeitliche Tiefpassfilterung führt zu einer Bewegungsverschleifung und ist daher zur Interpolation bewegter Bereiche ebenfalls wenig geeignet.

Für eine örtliche Konversion eines Zeilensprungsignals -also ein Signal, mit dem aufeinanderfolgende zeilenverkämmte Halbbilder übertragen werden-, in ein progressives Bildsignal -also ein Signal das Vollbilder enthält-, die sogenannte Proscan-Konversion, existieren statische lineare Verfahren, die auf einer vertikalen oder zeitlichen Filterung beruhen.

Da eine vertikale Tiefpassfilterung zu einem Auflösungsverlust in vertikaler Richtung führt, und eine zeitliche Tiefpassfilterung eine Bewegungsverschleifung in bewegten Bildbereichen bewirkt, wurden Verfahren entwickelt, die bewegungsadaptiv zwischen einer zeitlichen Filterung in unbewegten Bildbereichen und einer vertikalen Filterung in bewegten Bildbereichen umblenden. Derartige Verfahren sind in [9] erläutert.

Aufgrund der Nachteile linearer Interpolationstechniken wurden Verfahren entwickelt, die nichtlineare Medianfilter zur Interpolation verwenden. Der grundsätzliche Aufbau und die Funktion eines Medianfilters ist beispielsweise in [11] beschrieben. Medianfilter zur Bildverarbeitung sind beispielsweise in [12] beschrieben.

Bei der Medianfilterung werden Eingangswerte des Filters der Größe nach sortiert und der in der Mitte der sortierten Reihe liegende Wert ausgewählt, wobei die Reihe üblicherweise aus Werten einer ungeraden Anzahl besteht.

So wird in [1] ein Verfahren zur Proscan-Konversion vorgestellt, das auf einer linearen vertikalen Bandaufspaltung des Videosignals in einen Höhenkanal und einen Tiefenkanal sowie der Anwendung komplementärer Medianfilter im Höhen- und Tiefenkanal beruht.

Die Grundlage für die Anwendung einer örtlichen Bandaufspaltung liegt darin, dass der menschliche Wahrnehmungssinn durch ein Zweikanalmodell beschrieben werden kann. Hierbei existiert ein Tiefenkanal mit einer geringen örtlichen aber hohen zeitlichen Auflösung sowie ein Höhenkanal mit einer geringen zeitlichen aber hohen örtlichen Auflösung.

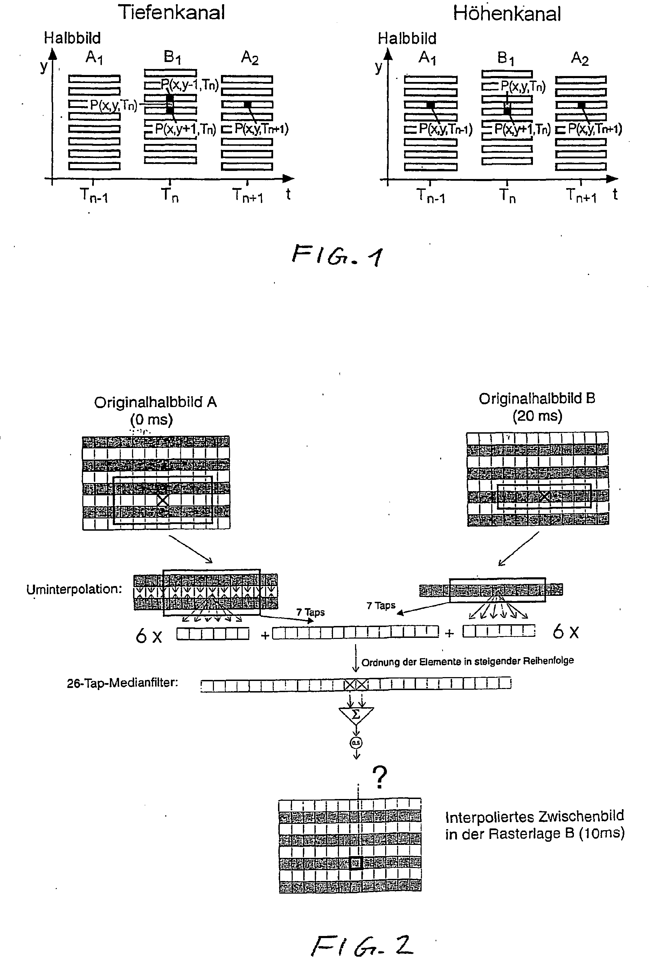

In [1] ist ein derartiges örtliches Konversionsverfahren mit einer Bandaufspaltung beschrieben, bei dem eine fehlende Zwischenzeile in einem Halbbild erzeugt wird und das anhand von Figur 1 erläutert wird. Figur 1 veranschaulicht nach einer Bandaufspaltung in einen Tiefenkanal und eine Höhenkanal jeweils drei aufeinanderfolge Halbbilder $A_1$, $B_1$,

$A_2$, wobei zwei aufeinanderfolgende Halbbilder $A_1$ und $B_1$ bzw. $B_1$ und $A_2$ gegeneinander versetzte Bildraster aufweisen. Die Zeilen, für die jeweils Bildinformationen übertragen werden, sind durch Umrahmungen gekennzeichnet. Das bekannte Verfahren sieht nun vor, die Bildinformation eines Bildpunktes (x,y), der in einer Zwischenzeile liegt, in dem Halbbild $B_1$ des Tiefenkanals, das heißt dem Halbbild zum Zeitpunkt $T_n$, durch eine Medianfilterung aus den in vertikaler Richtung benachbarten Bildpunkten (x,y-1) und (x,y+1) desselben Halbbildes und dem Bildpunkt an der Position (x,y) in dem darauffolgenden Halbbild $A_2$, das heißt dem Halbbild zum Zeitpunkt Tn+1, zu erzeugen. Wenn P(.) die Bildinformationen des jeweiligen Bildpunktes darstellt, gilt für Bildinformation des Bildpunktes (x,y) in dem Halbbild $B_1$ des Tiefenkanals also:

$$P(x,y,T_n) \;=\; \mathrm{Med} \left\{ \begin{array}{l} P(x,y-1,T_n) \\ P(x,y+1,T_n) \\ P(x,y,T_{n+1}) \end{array} \right\} , \qquad\qquad (1)$$

wobei Med{.} für die Medianfilterung steht.

Entsprechend wird die Bildinformation des Bildpunktes (x,y) in der Zwischenzeile des Halbbildes $B_1$ in dem Höhenkanal erzeugt durch:

$$P(x,y,T_n) \;=\; \mathrm{Med} \left\{ \begin{array}{l} P(x,y-1,T_n) \\ P(x,y+1,T_n) \\ P(x,y,T_{n+1}) \end{array} \right\} . \qquad\qquad (2)$$

Während für die Interpolation der Bildinformation des Bildpunktes (x,y) in dem Tiefenkanal Bildinformationen von Bildpunkten von nur zwei Halbbildern, nämlich in Figur 1 der Halbbilder $B_1$ und $A_2$ berücksichtigt werden, werden für die Interpolation der Bildinformation des Bildpunktes (x,y) in dem Höhenkanal, der im wesentlichen Bilddetails enthält, Bildinformationen von Bildpunkten von drei Halbbildern, nämlich der Halbbilder $A_1$, $B_1$ und $A_2$ verwendet.

Die Filterung für den Tiefenkanal ist vertikal (intrafield-) dominant, da zwei von drei berücksichtigten Bildpunkten in vertikaler Richtung in einem Bild übereinander liegen. Die Filterung für den Höhenkanal ist zeitlich (interfield-) bzw. rasterdominant, da die drei für die Filterung berücksichtigen Bildpunkte drei zeitlich aufeinander folgenden Halbbildern entstammen.

Das vertikal dominante Medianfilter im Tiefenkanal erlaubt eine recht gute Bewegungsdarstellung, z.B. bei horizontal bewegten vertikalen Kanten. Es führt allerdings zu Auflösungsverlusten in vertikal hochfrequenten, das heißt sich rasch ändernden Bildbereichen, die im Tiefenkanal jedoch von untergeordneter Bedeutung sind. Das im Höhenkanal verwendete rasterdominante Medianfilter weist hingegen die im Höhenkanal geforderte hohe Vertikalauflösung auf, führt jedoch in diesem Kanal zu einer schlechten Bewegungsdarstellung. Andere, auf modifizierten oder kantenrichtungsorientierten Medianfiltern basierende Verfahren werden in [1] vorgestellt.

Das beschriebene Verfahren mit subbandbasierter Signalverarbeitung für eine örtliche Konversion, nämlich die Erzeugung von Zwischenzeilen, wurde auf eine zeitliche Aufwärtskonversion von 50 Hz Zeilensprungsignalen auf 100 Hz Zeilensprungsignale erweitert, das heißt auf ein Konversionsverfahren, bei dem aus Halbbildern, die mit einer Bildfolge von 50Hz vorliegen, Halbbilder mit einer Bildfolge von 100Hz erzeugt werden.

Das resultierende Interpolationsschema des Tiefenkanals für die Interpolation eines mit β bezeichneten Zwischenhalbbildes, das zeitlich genau zwischen zwei Originalhalbbildern $A_1$ und $B_1$ liegt, ist in Figur 2 dargestellt und ist insbesondere in [1] und [4] erläutert. Dieses statische Interpolationsschema erlaubt eine positionsrichtige Interpolation von bewegten Kanten oder anderen großen Objekten innerhalb eines bestimmten Geschwindigkeitsbereichs. Die Grundlage hierfür liegt in der Kantenverschiebungseigenschaft von Medianfiltern, auf die noch näher eingegangen wird.

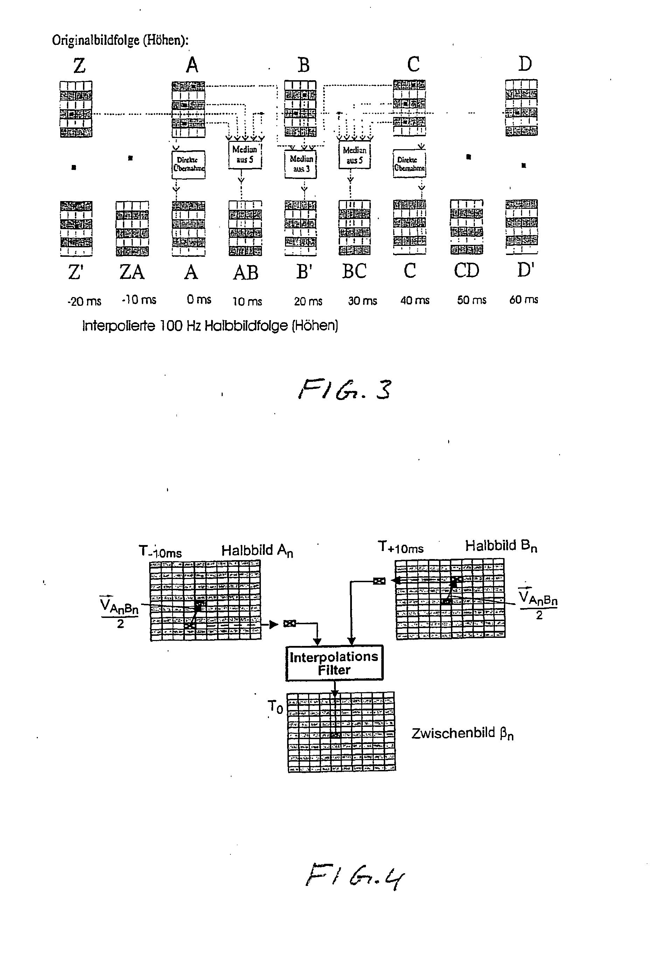

Im Höhenkanal wird ein 5-Tap Medianfilter für die Zwischenbildinterpolation eingesetzt. Dieses ist in Figur 3 verdeutlicht. Erkennbar werden hier im Gegensatz zum Tiefenkanal keine im Raster uminterpolierten Punkte dem Medianfilter zugeführt, um einem im Höhenkanal kritischen vertikalen Auflösungsverlust vorzubeugen. Jedes zweite Halbbild der Eingangsfolge wird dabei direkt als Halbbild für die Ausgangsbildfolge übernommen.

Für eine detailliertere Übersicht statischer und bewegungsadaptive Verfahren zur Zwischenbildinterpolation wird weiterhin auf [9] Bezug genommen.

### Bewegungsvektorgestützte Verfahren

Selbst bei Anwendung des zuvor beschriebenen fehlertoleranten Interpolationskonzepts kann eine korrekte Bewegungsdarstellung im Zwischenbild bei statischen Interpolationsverfahren nur bis zu einem bestimmten, von der Interpolationsmaskengröße abhängigen Geschwindigkeitsbereich erzielt werden. Zudem kann bei bewegten Bildinhalten im Höhenkanal auch bei rasterdominanten Medianfiltern ein Auflösungsverlust eintreten.

Daher wurden zur hochqualitativen Interpolation von Bewegtbildsequenzen Verfahren entwickelt, die eine bewegungsvektorgestützte Interpolation durchführen. Hierbei wird durch ein geeignetes Bewegungsschätzverfahren jedem Bildpunkt ein Bewegungsvektor $(v_x, v_y)$ zugeordnet, der angibt, um viele Rasterpositionen in x-Richtung und y-Richtung sich ein gegebener Bildpunkt von einem Bild/Halbbild zum nächsten Bild/Halbbild bewegt hat. Eine Übersicht über geeignete Bewegungsschätzverfahren zur Zuordnung eines Bewegungsvektors zu einem Bildpunkt bzw. zu einer Gruppe von Bildpunkten ist beispielsweise in dem Dokument [9] angegeben, auf das hiermit Bezug genommen wird.

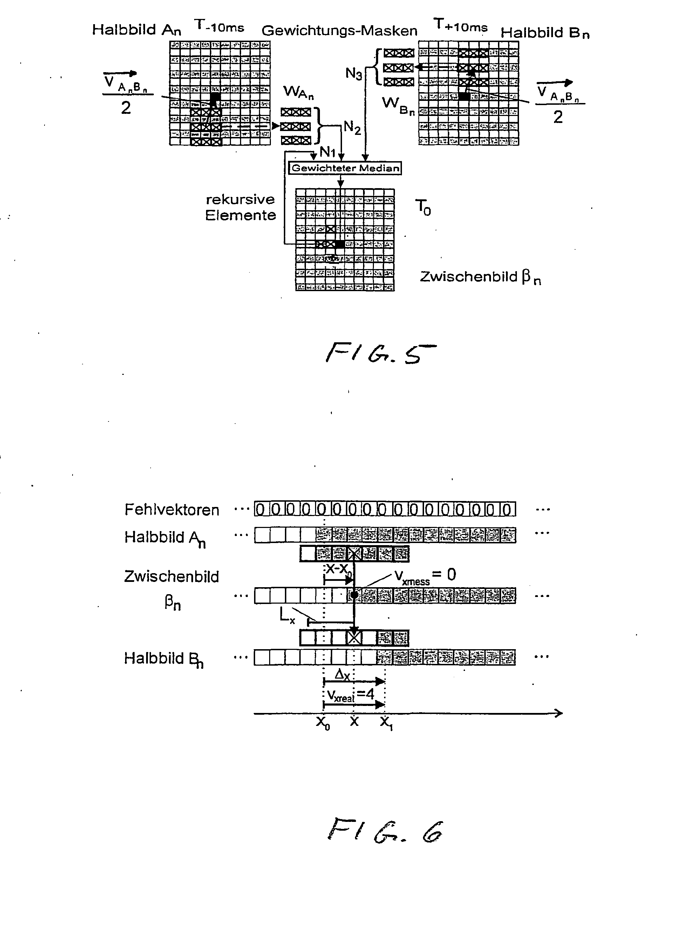

Durch eine Berücksichtigung eines solchen Bewegungsvektors bei der Interpolation bzw. durch eine bewegungsvektorgestützte Adressierung der Interpolationsfilter, wie sie schematisch in Figur 4 veranschaulicht ist, kann unter der Voraussetzung einer fehlerfreien Bewegungsschätzung und einer rein translatorischen Bewegung eine korrekte Interpolation auch in schnell bewegten Bildbereichen durchgeführt werden.

Bezugnehmend auf Figur 4 ist es der Grundgedanke der bewegungsvektorgestützten Interpolation, aus Positionen eines sich bewegenden Bildpunktes, in aufeinanderfolgenden Bilder/Halbbildern $A_n(T_{-10ms})$ und $B_n(T_{-10ms})$ einen Bewegungsvektor $V_{AnBn}$ zu ermitteln, der angibt, um wie viele Rasterpunkte sich der Bildpunkt bewegt hat, und in Kenntnis der Bildinformation des sich bewegenden Bildpunktes und des Bewegungsvektors in einem oder mehreren Zwischenbildern, die zeitlich zwischen den aufeinander folgenden Bildern/Halbbildern $A_n(T_{-10ms})$ und $B_n(T_{-10ms})$ liegen, Bildpunkte zu interpolieren, die auf dem Weg des Bewegungsvektors zwischen den Positionen in den Bildern/Halbbildern $A_n(T_{-10ms})$ und $B_n(T_{-10ms})$ liegen.

Ebenso wie bei der statischen und bewegungsadaptiven Interpolation existieren für die bewegungsvektorgestützte Interpolation lineare sowie nichtlineare Verfahren.

Unter der Annahme, dass die Positionen des sich bewegenden Bildpunktes also der Anfangs- und der Endpunkt des Bewegungsvektors in den Bildern/Halbbildern $A_n(T_{-10ms})$ und $B_n(T_{-10ms})$, und damit der Bewegungsvektor, exakt bekannt sind, genügt es, bei einem einfachen linearen Verfahren eine einfache Verschiebung oder auch eine lineare Mittelung durchzuführen werden. In [5] wird ein subbandbasiertes Interpolationsverfahren vorgestellt, bei der im Tiefenkanal eine Mittelung zwischen den beiden durch den Start- und Zielpunkt des Bewegungsvektors adressierten Bildpunkten durchgeführt wird, das heißt für die Bildinformation eines Bildpunktes (x,y) in einem Zwischenbild $\beta_n$ gilt:

$$P_\beta(x,y,T_0) = \tfrac{1}{2}[A_n(x-v_x/2,y-v_y/2,T_{-10ms}) + B_n(x+v_x/2,y+V_y/2,T_{+10ms}),$$

wobei $A_n(x-v_x/2, y-v_y/2, T_{-10ms})$, die Bildinformation des Bildpunktes in der Halbbildfolge An zum Zeitpunkt $T_{-10ms}$ bezeichnet, der den Ausgangspunkt des Bewegungsvektors darstellt, und wobei $B_n(x+vx/2,y+v_y/2,T_{+10ms})$ die Bildinformation des Bildpunktes in der Halbbildfolge $B_n$ zum Zeitpunkt $T_{+10ms}$ bezeichnet, der den Endpunkt des Bewegungsvektors darstellt. $v_x$ und $v_y$ sind die Komponenten des geschätzten Bewegungsvektors $V_{AnBn}$ für den Bildpunkt $(x-v_x/2,y-v_y/2)$ in dem Halbbild $A_n(T_{-10ms})$.

Im Höhenkanal wird in [5] die Bildinformation des Zwischenbildes durch eine vektorgestützte Verschiebung ermittelt, das heißt für die Bildinformation eines Bildpunktes (x,y) in einem Zwischenbild $\beta_n$ gilt:

$$P_\beta(x,y,T_0) = A_n(x-v_x/2,y-v_y/2,T_{-10ms})$$

oder

$$P_\beta(x,y,T_0) = B_n(x+v_x/2,y+v_y/2,T_{+10ms}).$$

Dieses Verfahren weist jedoch bei fehlerhaften, also bei nicht richtig geschätzten Bewegungsvektoren, nur eine geringe Fehlertoleranz auf.

Deshalb wird in [6] ein nichtlineares Interpolationsverfahren basierend auf einem 3-Tap Medianfilter vorgestellt. Hierbei ermittelt sich die Bildinformation eines Bildpunktes (x,y) eines gemäß Figur 4 zu interpolierenden Zwischenbildes β durch eine Medianfilterung von Bildinformationen des Anfangspunktes und des Endpunktes des Bewegungsvektors und eines Mittelwertes der Bildinformationen von Anfangs- und Endpunkt wie folgt:

$$P_\beta(x,y,T_n) = \mathrm{Med} \left\{ \begin{array}{l} A_n(x-v_x/2, y-v_y/2, T_{-10ms} \\ 1/2\,[A_n(x,y,T_{-10ms}) + B_n(x,y,T_{+10ms})] \\ B_n(x+v_x/2, y+v_y/2, T_{+10ms}) \end{array} \right\} \qquad (3)$$

Im Falle eines korrekt geschätzten Vektors sind die im Bild $A_n$ und dem Bild $B_n$ anhand des Bewegungsvektors ausgewählten Bildpunkte -die Anfangs- und Endpunkte des Bewegungsvektorsidentisch und bilden somit den Ausgangswert des Medianfilters. Bei fehlerhafter Bewegungsschätzung, wenn also die Anfangs- und Endpunkte des Bewegungsvektors nicht dieselbe Bildinformation enthalten, ergibt sich als Rückfallmodus eine lineare Bildmittelung und somit eine Bewegungsunschärfe.

Die bisher beschriebenen vektorgestützten Zwischenbildinterpolationsverfahren besitzen keine ausreichende Toleranz gegenüber fehlerhaften Schätzungen des Bewegungsvektors, also gegenüber Vektorfehlern. Eine Verbesserung der Bildqualität der interpolierten Bilder ist durch die Verwendung gewichteter vektorgestützter Medianfilter möglich, wie sie beispielsweise in den in [1,2,3] erläuterten Verfahren beschrieben sind.

Hierbei wird ebenfalls wie in dem in [4] beschrieben, nicht vektorgestützten Verfahren eine örtliche Bandaufspaltung durchgeführt.

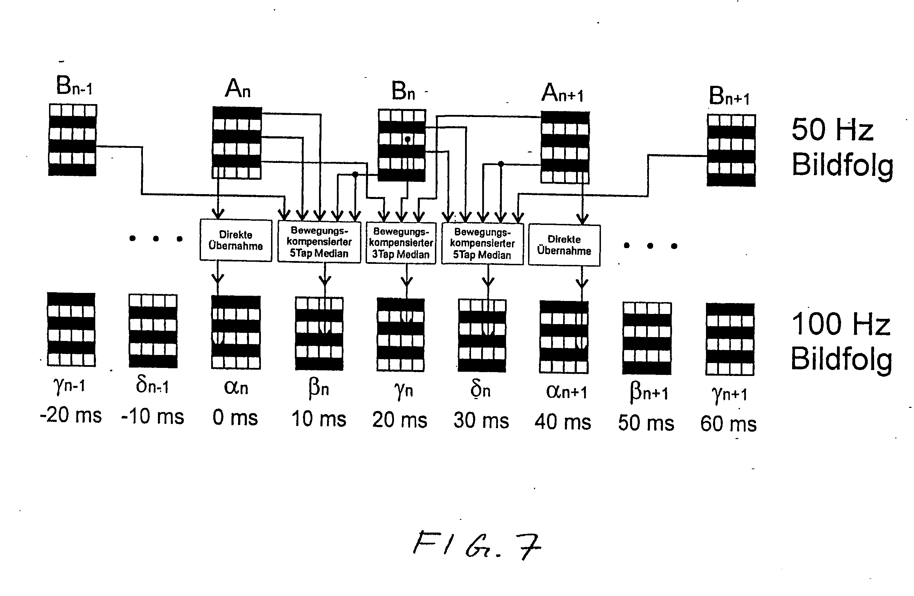

Das Interpolationsschema für den Tiefenkanal ist in Figur Abbildung 5 dargestellt. Einem Medianfilter werden dabei Bildinformationen von mehreren Bildpunkten zugeführt, die um den Anfangs-Bildpunkt des Bewegungsvektors $V_{AnBn}$ in dem Halbbild $A_n(T_{-10ms})$ und die um den End-Bildpunkt des Bewegungsvektors $V_{AnBn}$ in dem Halbbild $B_n$ $(T_{+10ms})$ liegen. Weiterhin werden dem Medianfilter als sogenannte rekursive Elemente Bildinformationen bereits ermittelter benachbarter Bildpunkte des Zwischenbildes $\beta_n$ zugeführt. Zur Veranschaulichung sind dem Medianfilter in Figur 5 jeweils die Bildinformationen von neun Bildpunkten des Halbbildes $A_n(T_{-10ms})$, neun Bildpunkte des Halbbildes $B_n$ $(T_{+10ms})$ und drei Bildpunkte des Zwischenbildes $\beta_n(T_0)$ zugeführt. Die dem Medianfilter zugeführten Bildinformationen können unterschiedlich gewichtet sein, wobei der Gewichtungsfaktor angibt, wie oft die Bildinformation eines Bildpunktes dem Medianfilter zugeführt wird.

Die zu interpolierenden Bildpunkte des Tiefenkanals berechnen sich gemäß

$$P_\beta(x,y,T_\beta) = \mathrm{Med} \left[ \begin{array}{lll} W_{An} & \lozenge & P_{An}(x-v_x/2, y-v_y/2, T_{An}) \\ W_{Bn} & \lozenge & P_{Bn}(x+v_x/2, y+v_y/2, T_{Bn}) \\ W_{\beta n} & \lozenge & P_{\beta n}(x-1, y, T_{\beta n}) \end{array} \right] \qquad (4)$$

Hierbei beschreiben $W_{An}$, $W_{Bn}$ und $W_{\beta n}$ Masken um die jeweiligen vektoradressierten Bildpunkte und $\lozenge$ bezeichnet den Duplikationsoperator, der angibt, wie oft ein Abtastwert in die Filtermaske geführt wird. Die Bildpunkte, in den Halbbildern $A_n(T_{-10ms})$ und $B_n(T_{+10ms})$, um die Filtermasken gelegt sind, sind gegenüber dem zu interpolierenden Bildpunkt (x,y) in dem Zwischenbild $\beta_n(T_0)$ jeweils um einen Anteil des Bewegungsvektors verschoben, wobei dieser Anteil in Figur 5 dem halben Bewegungsvektor entspricht, da das zu interpolierende Zwischenbild $\beta_n(T_0)$ zeitlich genau in der Mitte zwischen den Halbbildern $A_n(T_{-10ms})$ und $B_n(T_{+10ms})$ liegt.

Falls der Bewegungsvektor in einem der Halbbilder auf eine Bildzeile zeigt, die in dem entsprechenden Halbbild nicht existiert, findet eine lineare Uminterpolation statt, wie dies in [9] beschrieben ist.

Der Vorteil der vektorgestützten gewichteten Medianfilter besteht darin, dass sie fehlerhafte Bewegungsvektoren bis zu einer bestimmten Fehlergröße korrigieren können. Dies ist von großer Bedeutung, da in natürlichen Bildsequenzen Vektorfehler nicht zu vermeiden sind.

Die Eigenschaft der Korrektur von Vektorfehlern soll anhand des Modells einer horizontal bewegten idealen vertikalen Kante zwischen hellen und dunklen Bildpunkten anhand von Figur 6 verdeutlicht werden, wobei ein fehlerhafter Bewegungsvektor geschätzt wurde. In Figur 6 sind jeweils eine Zeile der Halbbilder $A_n$, $B_n$ sowie des Zwischenbildes $\beta_n$ sowie die jeweiligen fehlerhaft geschätzten Vektoren dargestellt.

Für das Beispiel wird davon ausgegangen, dass sich die Modellkante mit einer Geschwindigkeit von $v_{xreal} = 4$ Pixel/Halbbild bewegt, dass die Geschwindigkeit aber fehlerhaft zu $v_{xmess} = 0$ Pixel/Halbbild geschätzt wurde, so dass die Medianmasken im Vorgänger- und Nachfolgerbild daher an der gleichen Stelle positioniert werden, wohingegen die Masken korrekterweise um 4 Pixel gegeneinander verschoben positioniert sein müssten.

Dem Medianfilter werden in dem Beispiel nach Figur 6 die Bildinformationen von sieben Bildpunkten des Halbbildes $A_n$ einschließlich des den Beginn des dunklen Bereiches nach der Kante markierenden Bildpunktes $x_0$ zugeführt, die innerhalb einer Auswahlmaske liegen, wobei die Maske unter der Bildzeile fett umrandet dargestellt ist. Weiterhin werden dem Medianfilter die Bildinformationen von sieben Bildpunkten des Halbbildes $B_n$ zugeführt, die innerhalb einer Auswahlmaske liegen, die über der Bildzeile fett umrandet dargestellt ist, wobei die Positionen dieser Bildpunkte den Positionen der berücksichtigten Bildpunkte des Halbbildes $A_n$ entsprechen, da die Auswahlmaske aufgrund der nicht korrekten Bewegungsschätzung nicht verschoben wurde. Wie ersichtlich ist, werden dem Medianfilter die Bildinformationen bzw. Helligkeitsinformationen von acht dunklen Bildpunkten nach der Kante und sechs hellen Bildpunkten vor der Kante zugeführt. Das Ergebnis der Medianfilterung dieser Bildpunkte ist selbst bei einheitlich gewichteten Auswahlmasken ein dunkler Bildpunkt, der an der Position x in dem Zwischenbild interpoliert wird.

Durch das Medianfilter wird die Kante im Zwischenbild $\beta_n$, das zeitlich in der Mitte zwischen den Halbbildern $A_n$, $B_n$ liegt, trotz der fehlerhaften Bewegungsvektoren korrekt auf eine Position interpoliert, die der halben Strecke zwischen der Kante in dem Halbbild $A_n$ und der Kante in dem Halbbild, $B_n$ entspricht, wie durch Bildung der Luminanzbilanzen zwischen den hellen und dunklen Bildpunkten überprüft werden kann.

Ein lineares Interpolationsfilter würde hingegen zu einem 4 Pixel breiten Bereich mit mittlerer Helligkeit und somit zu einem deutlichen Verschleifen der Kante führen [9].

Neben dem Verhalten bei korreliertem Bildsignal, wie z.B. Kanten oder Flächen kann auch das Verhalten bei nicht korreliertem Bildsignal (z.B. unregelmäßige Texturen) untersucht werden. Es zeigt sich, dass die gewichteten Medianfilter bei geeigneter Wahl der Filtergewichte in der Lage sind, bei korrekter Bewegungsschätzung die Details des nicht korrelierten Bildinhalts zu erhalten. Bei falsch geschätztem Vektor findet eine Auslöschung feiner Details statt, was gemäß [1] für eine 50 Hz auf 100 Hz Konversion gegenüber einer positionsfalschen Darstellung zu bevorzugen ist.

Als Medianmasken im Tiefenkanal werden in dem Verfahren gemäß [1,2,3] die in Figur 8 dargestellten Masken verwendet. Dabei wird für die aus den Halbbildern $A_n$ und $B_n$ auszuwählenden Bildpunkte eine sternförmige Auswahlmaske verwendet, wobei die Anfangs- und Endpunkte des Bewegungsvektors $V_{AnBn}$ jeweils mit dem Faktor 5 stärker als die umliegenden Werte (Faktor 1) gewichtet werden. Dem Medianfilter wird zudem die Bildinformation eines bereits ermittelten Bildpunktes des Zwischenbildes zugeführt.

In aufgedeckten Bildbereichen findet im Tiefenkanal eine 3-Tap Medianfilterung statt [3].

Für den Höhenkanal finden bei den Verfahren nach [1,2,3] wie schon beim statischen Verfahren gemäß [4] rasterdominante Medianfilter Anwendung, nur dass diese nun vektoradressiert werden. Dieses Verfahren ist in Figur 8 dargestellt, die [3] entnommen ist.

In [10] wird eine IC-Realisierung eines Zwischenbildinterpolationsverfahrens basierend auf gewichteten Medianfiltern dargestellt. Ein IC zur Formatkonversion beruhend auf einem zuverlässigkeitsgesteuerten Medianfilter wird in [7] beschrieben.

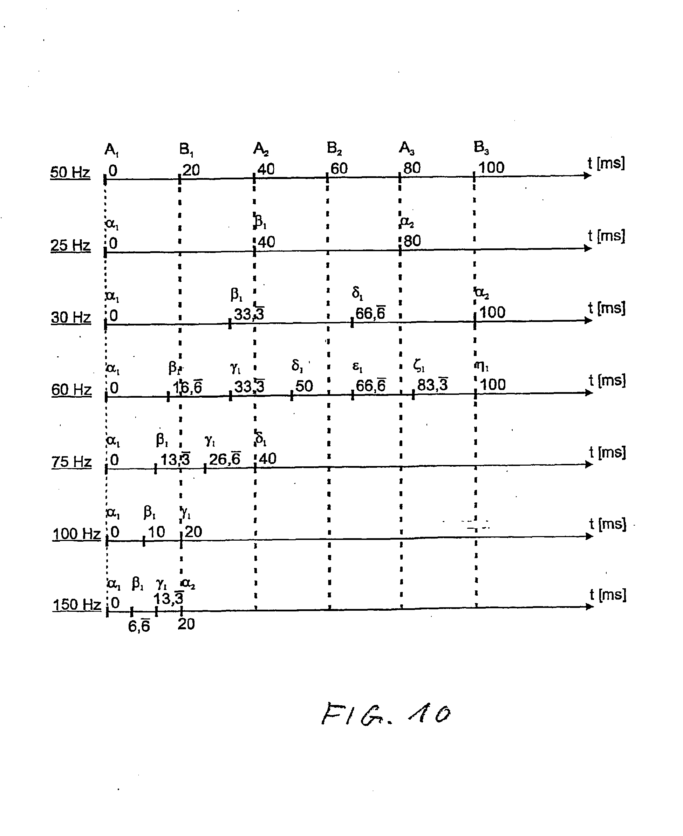

In [8] wird ein Interpolationsverfahren vorgestellt, das ebenfalls auf gewichteten Medianfiltern basiert. Hierbei findet jedoch keine Höhen-/Tiefentrennung statt, und es wird keine lineare Uminterpolation durchgeführt, falls der Vektor eine im Halbbild nicht vorhandene Zeile adressiert. Stattdessen wird für den Fall, dass der Vektor eine vorhandene Zeile adressiert die Medianmaske gemäß Abbildung 9 a) verwendet, andernfalls die Medianmaske gemäß Abbildung 9 b). Falls die Gesamtsumme der Filtergewichte gerade ist, wird zusätzlich der links oberhalb der aktuellen Position befindliche, bereits berechnete Bildpunkt des Zwischenbildes in das Medianfilter eingeführt.

Das in [3] vorgestellte Interpolationsverfahren erzielt bei der Konversion von 50 Hz Zeilensprungsignalen auf 100 Hz Zeilensprungsignale bereits eine sehr gute Interpolationsqualität, was auch auf die Fehlerkorrektureigenschaften der gewichteten Medianfilter zurückzuführen ist.

Betrachtet man eine Formatkonversion, bei der das Verhältnis zwischen Eingangsbildrate und Ausgangsbildrate von dem obigen Verhältnis 50:100 abweicht, so ergeben sich für die Vektorprojektion andere Randbedingungen. Dies wird anhand von Figur 10 deutlich, in der die zeitlichen Positionen der Ausgangsbilder für verschiedene Ausgangsbildraten im Vergleich zu einer 50 Hz Eingangssequenz dargestellt sind.

Bei der bereits betrachteten Konversion auf 100 Hz stimmen die Bilder der Ausgangssequenz zeitlich entweder mit einem Bild der Eingangssequenz überein, oder die zu interpolierenden Zwischenbilder liegen bei der Wiedergabe zeitlich genau zwischen zwei Eingangsbildern. Im zweiten Fall ergibt sich eine Vektorprojektion gemäß Figur 4, bei der die gemessenen bzw. geschätzten Bewegungsvektoren $V_{AnBn}$ ausgehend von einem jeweiligen Bildpunkt des Zwischenbilds jeweils mit einem Projektionsfaktor 0,5 in das vorherige bzw. in das nachfolgende Originalbild projiziert werden, das heißt, die Bildinformation eines Bildpunktes in dem Zwischenbild wird interpoliert unter Verwendung von Bildpunkten, die in solchen Bereichen der Eingangsbilder liegen, die jeweils um den mit 0,5 multipliziertem Bewegungsvektor von dem zu interpolierenden Punkt entfernt liegen.

Bei anderen Bildratenverhältnissen müssen jedoch Zwischenbilder an zeitlichen Positionen interpoliert werden, die nicht genau mittig zwischen zwei Eingangsbildern liegen, so dass sich verschiedene, von 0,5 abweichende Projektionsfaktoren für die zu interpolierenden Zwischenbilder ergeben.

Des weiteren ist zu erkennen, dass zwischen zwei Ausgangsbildern, die zeitlich genau mit einem Eingangsbild übereinstimmen, deutlich mehr als ein zeitlich zu interpolierendes Zwischenbild liegen kann. Bei einer Frequenz $f_{org}$=50 Hz der Eingangssequenz und einer Ausgangsfrequenz $f_{int}$=60 Hz der interpolierten Sequenz stimmt z.B. nur jedes sechste Ausgangsbild zeitlich mit einem Eingangsbild überein. Da somit das Verhältnis interpolierter Bilder zu Originalbildern deutlich größer ausfällt als bei einer Konversion auf $f_{int}$=100 Hz sind die Qualitätsanforderungen an das Interpolationsverfahren ebenfalls deutlich höher.

Allgemein lassen sich alle möglichen Projektionsfaktoren, die bei einer Konversion von $f_{org}$ auf $f_{int}$ entstehen, bestimmen gemäß

$$p_{links} = k \cdot f_{org}/f_{int} - \lfloor k \cdot f_{org}/f_{int} \rfloor \tag{5}$$

und

$$p_{rechts} = 1 - p_{links} = 1 - k \cdot f_{org}/f_{int} + \lfloor k \cdot f_{org}/f_{int} \rfloor \tag{6}$$

mit k=0, 1,2,..., $k_{max}$-1 und $k_{max}$ = $f_{int}$/ggT ($f_{org}$, $f_{int}$), wobei $\lfloor k \cdot f_{org}/f_{int} \rfloor$ den ganzzahligen Anteil von $k \cdot f_{org}/f_{int}$ darstellt und ggT die Operation zur Ermittlung des größten gemeinsamen Teilers bezeichnet.

Der Projektionsfaktor $p_{links}$ bezeichnet also den auf die Periodendauer des Originalsignals normierten zeitlichen Abstand zwischen dem zu interpolierenden Zwischenbild und dem jeweils vorherigen Bild/Halbbild, wobei die Periodendauer den zeitlichen Abstand zwischen zwei aufeinanderfolgenden Bildern/Halbbildern der Originalbildfolge darstellt. Entsprechend bezeichnet $p_{rechts}$ den auf die Periodendauer des Originalsignals normierten zeitlichen Abstand zwischen dem zu interpolierenden Zwischenbild und dem jeweils nachfolgenden Bild/Halbbild.

Die beiden Projektionsfaktoren $P_{links}$ und $P_{rechts}$ ergänzen sich zu 1.

Ersichtlich ergeben sich genau $k_{max}$ verschiedene Interpolationsphasen bzw. Projektionsfaktorpaare mit jeweils einem linken und einem rechten Projektionsfaktor bei einer Bildratenkonversion von $f_{org}$ auf $f_{int}$. Danach findet eine zyklische Wiederholung der Projektionsfaktoren statt.

Der Einfluss von Vektorfehlern bei unterschiedlichen Projektionsfaktoren ist dabei unterschiedlich groß, wie in der folgenden Darstellung erläutert wird, in der diese Auswirkungen fehlerhafter Bewegungsvektoren bei unterschiedlichen Projektionsphasen näher betrachtet werden.

Zur Veranschaulichung wird angenommen, dass bei einer Konversion von 50 Hz auf 60 Hz das Bild $\zeta_1$ der 60-Hz-Folge gemäß Figur 10 interpoliert werden soll aus den Halbbildern $A_3$ und $B_3$ der 50-Hz-Folge. Die zugehörigen Projektionsfaktoren $p_{links}$ in das vorherige Originalbild $A_3$ und $p_{rechts}$ in das nachfolgende Originalbild $B_3$ ermitteln sich zu $P_{links}$=1/6 und $P_{rechts}$=5/6

Nachfolgend wird zur Veranschaulichung von einer progressiven Bilddarstellung ausgegangen, die erörterten Probleme ergeben sich in entsprechender Weise aber auch für eine Zeilensprungdarstellung (= Darstellung in Halbbildern).

Zur Veranschaulichung sei angenommen, dass die gemessene Geschwindigkeit $v_{mess}$=(12,12) beträgt, so dass sich in das vorherige Bild $A_3$ eine projizierte Geschwindigkeit von

$$vp_{links} = p_{links} \cdot v_{mess} = 1/6 \cdot (12,12) = (2,2) \tag{7}$$

und in das nachfolgende Bild $B_3$ eine projizierte Geschwindigkeit von

$$vp_{rechts} = p_{rechts} \cdot v_{mess} = 5/6 \cdot (12,12) = (10,10) \qquad (8)$$

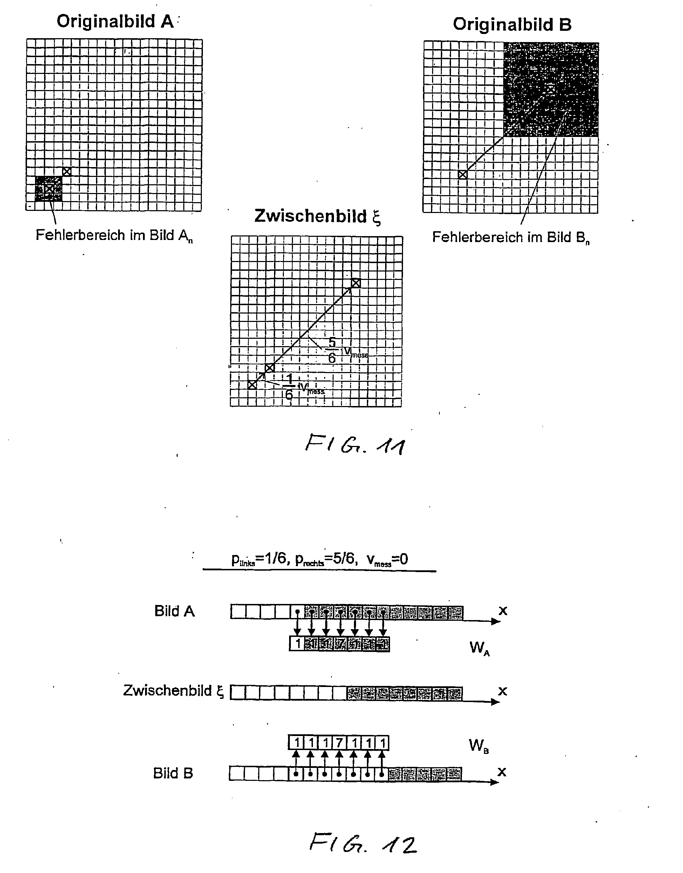

ergibt, mit der die Interpolationsfilter im vorherigen und nachfolgenden Bild $A_3$, $B_3$ ausgehend von dem zu interpolierenden Bildpunkt adressiert bzw. positioniert werden. Die Position des zu interpolierenden Bildpunktes sowie die Adressierungspositionen des Filters, die ausgehend von dem zu interpolierenden Punkt um $vp_{rechts}$ bzw. $vp_{links}$ verschoben sind, sind im Zwischenbild $\zeta$ in Abbildung 11 dargestellt. Die Adressierungsposition bezeichnet dabei die Position der Bildpunkte in den Originalbildern auf die eine Filtermaske für die Auswahl zu filternder Bildpunkte gesetzt wird. Bei korrekter Schätzung des Bewegungsvektors entsprechen die Adressierungspositionen den Anfangs- und Endpositionen eines sich von Bild A nach Bild B bewegenden Bildpunktes.

Wird jetzt angenommen, dass der geschätzte Bewegungsvektor mit einem maximalen Fehler von $\pm 6$ in x-und y-Richtung behaftet ist, so ergeben sich hieraus nach der Vektorprojektion die in Abbildung 11 grau dargestellten Fehlerbereiche, wobei die Positionierung der Filtermasken im Originalbild B erheblich stärker abhängig von Vektorfehlern, als die Positionierung des Filters im Originalbild A ist.

Für ein weiteres Beispiel zur Veranschaulichung des Einflusses eines Vektorfehlers soll wieder bei einer Konversion von 50 Hz auf 60 Hz das Bild $\xi_1$ aus Figur 10 aus den Originalbildern $A_3$ und $B_3$ interpoliert werden, wobei für die Projektionsfaktoren gilt: $p_{links}=1/6$ und $P_{rechts}=5/6$.

Betrachtet werde in Figur 12 eine horizontal mit der Geschwindigkeit $v_{real}=6$ Pixel/Bild bewegte ideale vertikale Kante. Geschätzt sei jedoch die Geschwindigkeit $v_{mess}=0$, so dass die Filtermasken $W_A$ im Bild A und $W_B$ im Bild B an der gleichen Stelle positioniert werden.

Werden entsprechend dem in [3] erläuterten Verfahren für Bild A und Bild B die gleichen Filtermasken verwendet, ergibt sich eine Interpolation der bewegten Kante in dem Zwischenbild $\zeta$ an einer Position, die der halben Distanz zwischen der Kante in dem Bild A und dem Bild B entspricht. Diese Position ist nicht korrekt, weil das zu interpolierende Zwischenbild zeitlich nicht in der Mitte zwischen den Bildern A und B liegt.

## Beschreibung der Erfindung

Ziel der vorliegenden Erfindung ist es daher, ein Verfahren und eine Vorrichtung zur Konversion von Videosignalen zur Verfügung zu stellen, das in der Lage ist eine korrekte Interpolation von Zwischenbildern auch dann zu liefern, wenn das Verhältnis der Frequenz von Ausgangsbildfolge zu Eingangsbildfolge von 100:50 abweicht und insbesondere einen nicht ganzzahligen Wert annimmt.

Dieses Ziel wird durch ein Verfahren gemäß der Merkmale des Anspruchs 1 und eine Vorrichtung gemäß der Merkmale des Anspruchs 16 gelöst. Vorteilhafte Ausgestaltungen der Erfindung sind Gegenstand der Unteransprüche.

Die Erfindung betrifft ein Verfahren zur bewegungsvektorgestützten Konversion eines ersten Videosignals, das eine erste Bildfolge mit einer ersten Frequenz enthält, in ein zweites Videosignal, das eine zweite Bildfolge mit einer zweiten Frequenz enthält, wobei wenigstens einige Bilder der zweiten Bildfolge, die phasenverschoben gegenüber Bildern der ersten Bildfolge sind, durch eine Interpolation von Bildern der ersten Bildfolge derart gebildet werden, dass für einen Bildpunkt eines Bildes der zweiten Bildfolge Bildpunkte wenigstens eines ersten Bildes und eines zweiten Bildes der ersten Bildfolge mittels eines Medianfilters gefiltert werden, wobei das Medianfilter erfindungsgemäß ein adaptiv gewichtetes Medianfilter ist.

Das Medianfilter ist gemäß einer Ausführungsform abhängig von einer Interpolationsphase zwischen dem zu interpolierenden Bild der zweiten Bildfolge und dem ersten und/oder zweiten Bild der ersten Bildfolge, und somit abhängig von den Projektionsfaktoren adaptiv gewichtet.

Gemäß weiteren Ausführungsformen ist vorgesehen, das Medianfilter abhängig von einem lokalen Bildinhalt oder von Eigenschaften eines Vektorfeldes von Bewegungsvektoren adaptiv zu gewichten.

Bei einer Ausführungsform zur Realisierung des Verfahrens wird für jede von mehreren verschiedenen Interpolationsphasen eine erste Filtermaske, die die Auswahl und die Gewichtung der Bildpunkte des ersten Bildes für die Medianfilterung bestimmt, und eine zweite Filtermaske, die die Auswahl und die Gewichtung der Bildpunkte des zweiten Bildes für die Medianfilterung bestimmt, erzeugt. Diese Filtermasken werden abhängig von der momentanen Interpolationsphase für die Filterung ausgewählt und verwendet.

Bei der Erzeugung der Filtermasken bzw. Filter werden vorteilhafterweise folgende Kriterien berücksichtigt:

- Die Filtermasken sind so gewählt, dass eine bewegte ideale horizontale oder vertikale Kante trotz eines Schätzfehlers an die für die jeweilige Interpolationsphase korrekte Kantenposition interpoliert wird.

- Bei korrekt geschätztem Bewegungsvektor sollten auch feine Bilddetails erhalten bleiben, dies kann dadurch erreicht werden, dass die Summe der Zentralgewichte beider Filtermasken größer ist, als die Summe der übrigen Gewichte.

- Die Korrekturfähigkeit eines gewichteten Medianfilters nimmt im allgemeinen mit dessen Größe zu. Daher ist die Ausdehnung der Filtermasken vorzugsweise umso größer, je größer der zugehörige Projektionsfaktor ist, damit die sich hieraus ergebenden größeren Fehlerbereiche korrigiert werden können.

- Da die Informationen aus dem Bild mit geringerem Projektionsfaktor in der Regel zuverlässiger ist, ist die Majorität der Filtergewichte vorzugsweise der Filtermaske mit dem geringeren Projektionsfaktor zugeordnet, wobei dieser Effekt umso ausgeprägter ist, je stärker sich die Projektionsfaktoren unterscheiden.

- Die Wahrscheinlichkeit, dass eine Maske mehrere Objekte überlappt, und somit aufgrund einer Verletzung der Modellannahme (eine bewegte Kante) zu Interpolationsfehlern führt, steigt mit steigender Maskengröße. Durch eine Erkennung kritischer Bereiche, z.B. durch eine Kantendetektion, ist eine entsprechende Adaption der Filtergröße möglich. Gemäß einer Ausführungsform ist also vorgesehen, für jede Interpolationsphase mehr als eine erste Filtermaske und mehr als eine zweite Filtermaske bereit zu stellen, die jeweils für eine Filterung unterschiedlich strukturierter Bildbereiche geeignet sind, und die Filtermasken abhängig von einer Detektion derartiger Bildbereiche auszuwählen.

- Die Zuverlässigkeit der Bewegungsvektoren ist nicht überall im Bild gleich. So ist z.B. in Übergangsbereichen zwischen unterschiedlichen Vektoren aufgrund der in der Regel blockweisen Bewegungsschätzung eine größere Unzuverlässigkeit anzunehmen, als innerhalb homogener Vektorbereiche. Zudem kann das Ähnlichkeitsmaß, aufgrund dessen die Bewegungsvektoren ermittelt wurden für eine Zuverlässigkeitsbeurteilung herangezogen werden. Ebenso sind in der Regel bei größeren Vektorbeträgen auch höhere Ungenauigkeiten zu erwarten. Gemäß einer Ausführungsform ist daher die Größe und die Gewichtung der Filtermasken an die Zuverlässigkeit der Bewegungsvektoren adaptiert.

Darüber hinaus werden bei der Erzeugung der Filtermasken auch die anhand des Bewegungsvektors ermittelte Geschwindigkeit berücksichtigt, um einen maximal zu korrigierenden Vektorfehlerbetrag des Bewegungsvektors beim Filterentwurf berücksichtigen zu können, so dass für eine Interpolationsphase, die durch den Projektionsfaktor bestimmt ist, abhängig von der Geschwindigkeit und dem maximal zu korrigierenden Vektorfehler mehrere unterschiedliche Filtermasken vorgehalten bzw. erzeugt werden können.

Unter Berücksichtigung obiger Kriterien lassen sich mittels hinlänglich bekannter, geeigneter Filterentwurfsverfahren, ein- oder zweidimensionale gewichtete Medianfilter entwerfen, die für obige Vorgaben und ideale horizontale oder vertikale Kanten eine vollständige Kompensation von Schätzfehlern innerhalb des vorgegebenen Fehlerbetrages ermöglichen.

Mit vollständiger Kompensation eines Schätzfehlers ist hierbei gemeint, dass das Filter z.B. bei einem vorgegebenen Schätzfehler $\pm6$ den gesamten Fehlerbereich {-6,-5, ..., -1,0, 1, ..., 5,6} (unter Beachtung des jeweiligen Rundungskonzepts zur Erzielung einer pixelgenauen Filteradressierung) korrigieren kann.

Die vorliegende Erfindung wird nachfolgend in Ausführungsbeispielen anhand von Figuren näher erläutert.

Figur 1    veranschaulicht ein Verfahren zur Erzeugung von Bildpunkten einer Zwischenzeile unter Verwendung eines Medianfilters nach dem Stand der Technik.

Figur 2    veranschaulicht ein Verfahren zur Erzeugung eines 100 Hz-Bildsignals aus einem 50 Hz-Bildsignals unter Verwendung einer Medianfilterung für einen Tiefenkanal nach dem Stand der Technik.

Figur 3    veranschaulicht ein Verfahren zur Erzeugung eines 100 Hz-Bildsignals aus einem 50 Hz-Bildsignal unter Verwendung einer Medianfilterung für einen Höhenkanal nach dem Stand der Technik.

Figur 4    veranschaulicht schematisch ein Verfahren zur bewegungsvektorgestützten Erzeugung eines Zwischenbildes aus zwei Halbbildern einer Originalbildfolge unter Verwendung eines Interpolationsfilters.

Figur 5    veranschaulicht schematisch ein Verfahren zur bewegungsvektorgestützten Erzeugung eines Zwischenbildes aus zwei Halbbildern einer Originalbildfolge unter Verwendung eines gewichteten Medianfilters als Interpolationsfilter.

Figur 6    veranschaulicht eine bewegungsvektorgestützte Erzeugung eines Zwischenbildes aus zwei Halbbildern einer Originalbildfolge anhand einer ausgewählten Zeile des Zwischenbildes.

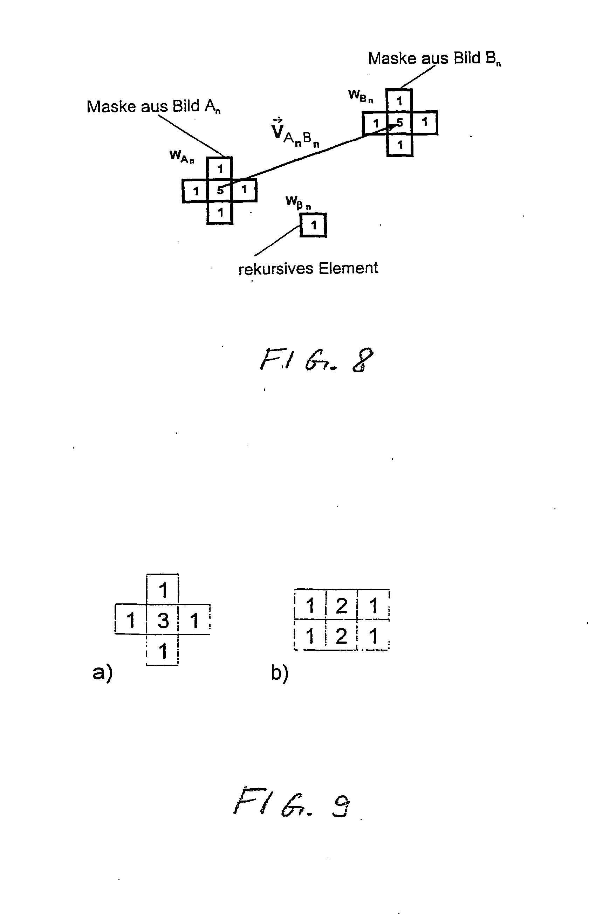

Figur 7 veranschaulicht das Interpolationsverfahren für den Höhenkanal für Interpolationsverfahren gemäß der Veröffentlichungen [1,2,3] nach dem Stand der Technik.

Figur 8 zeigt die Filtermasken für Interpolationsverfahren gemäß der Veröffentlichungen [1, 2, 3] nach dem Stand der Technik.

Figur 9 zeigt Interpolationsmasken für ein in [8] beschriebenes Verfahren nach dem Stand der Technik.

Figur 10 veranschaulicht die zeitlichen Positionen der Bilder von interpolierten Bildfolgen im Vergleich zu einer 50 Hz-Originalfolge.

Figur 11 veranschaulicht den Einfluss eines Schätzfehler bei verschiedenen Projektionsfaktoren.

Figur 12 zeigt jeweils eine Zeile eines ersten und zweiten Bildes einer Originalfolge und eine Zeile eines interpolierten Zwischenbildes bei nicht adaptierten Filtern.

Figur 13 zeigt jeweils eine Zeile eines ersten und zweiten Bildes einer Originalfolge und eine Zeile eines interpolierten Zwischenbildes bei einem erfindungsgemäß verwendeten adaptiv gewichteten Medianfilter als Interpolationsfilter.

Figur 14 zeigt eine erfindungsgemäße Vorrichtung zur Erzeugung eines zweiten Videosignals aus einem ersten Videosignal unter Verwendung eines adaptiv gewichteten Medianfilters ohne Bandaufspaltung.

Figur 15 zeigt eine erfindungsgemäße Vorrichtung zur Erzeugung eines zweiten Videosignals aus einem ersten Videosignal unter Verwendung von adaptiv gewichteten Medianfiltern mit Bandaufspaltung.

Figur 16 veranschaulicht eine Interpolation für den Tiefenkanal bei einer Bandaufspaltung des ersten Videosignals in einen Höhen- und Tiefenkanal.

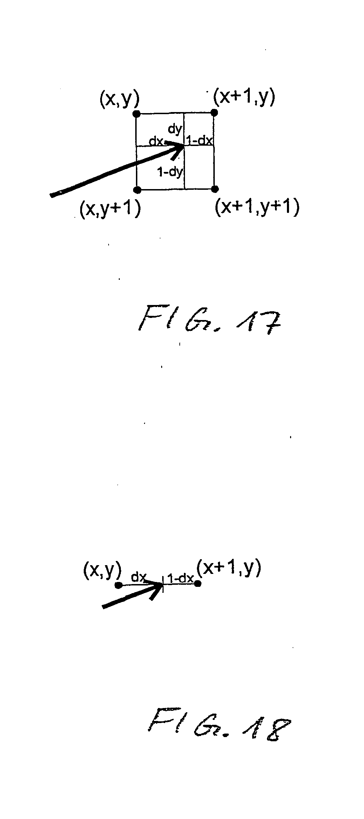

Figur 17 veranschaulicht eine bilineare Interpolation im Tiefenkanal bei einer Bandaufspaltung des ersten Videosignals in einen Höhen- und Tiefenkanal.

Figur 18 veranschaulicht eine lineare horizontale Interpolation im Höhenkanal bei einer Bandaufspaltung des ersten Videosignals in einen Höhen- und Tiefenkanal.

Figur 19 veranschaulicht eine Interpolation im Höhenkanal bei einer Bandaufspaltung des ersten Videosignals in einen Höhen- und Tiefenkanal.

Figur 20 veranschaulicht eine erfindungsgemäße Interpolation bei einer progressiven Eingangsbildfolge.

In den Figuren bezeichnen, sofern nicht anders angegeben gleiche Bezugszeichen gleiche Teile mit gleicher Bedeutung.

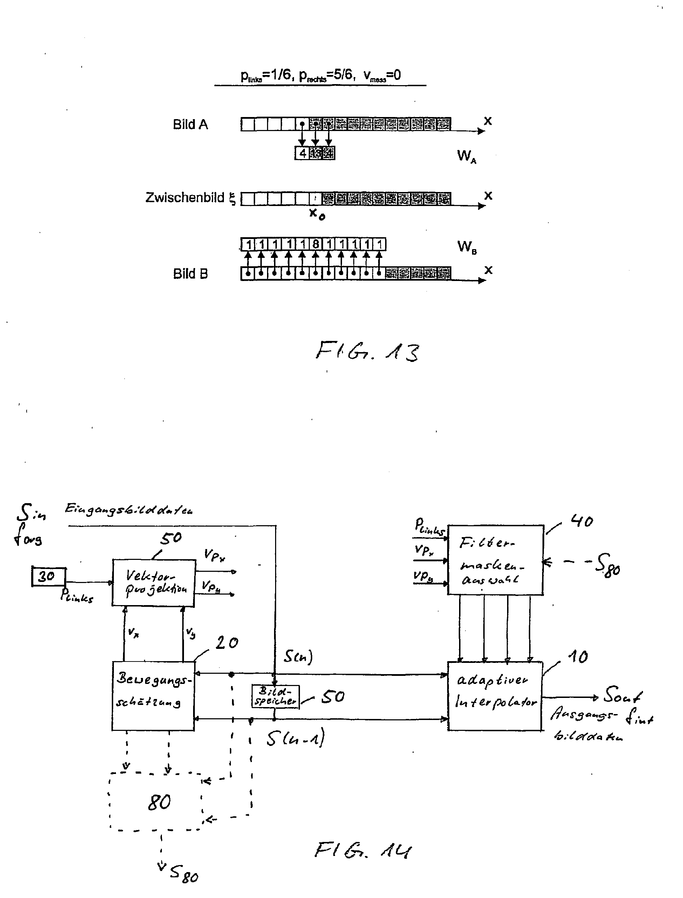

In Anlehnung an das anhand von Figur 6 veranschaulichte und oben erläuterte Interpolationsverfahren wird nachfolgend anhand von Figur 13 das erfindungsgemäße Verfahren erläutert, bei dem die bei dem Stand der Technik auftretenden Probleme, die anhand von Figur 12 erläutert wurden, nicht entstehen.

In Figur 13 sind jeweils eine Zeile von aufeinanderfolgenden Bildern A und B und eine Zeile eines mittels des erfindungsgemäßen Verfahrens erzeugten Zwischenbildes ζ dargestellt.
Für das Beispiel wird davon ausgegangen, dass sich eine Kante zwischen hellen und dunklen Bildpunkten mit einer Geschwindigkeit von $V_{xreal}$ = 6 Pixel/Bild bewegt, dass ein Bewegungsvektor jedoch nicht korrekt zu $v_{mess}$ = 0 Pixel/ Halbbild geschätzt wurde.

Das Zwischenbild ζ sei in dem Beispiel ein Zwischenbild der 60Hz-Bildfolge gemäß Figur 10 und die Bilder A und B seien Bilder der 5OHz-Bildfolge gemäß Figur 10, wobei die Bilder A und B Halbbilder oder Vollbilder sein können. Für einen linken Projektionsfaktor gilt in dem Beispiel $p_{links}$=1/6, entsprechend gilt für einen rechten Projektionsfaktor $p_{rechts}$=1-$P_{links}$ = 5/6.

Unter der Zeile des Bildes A ist eine Filtermaske $W_A$ dargestellt, die angibt, welche der Bildpunkte der Zeile mit welcher Gewichtung einer Medianfilterung unterzogen werden. Über der Zeile des Bildes B ist eine zweite Filtermaske $W_B$ dargestellt, die angibt, welche der Bildpunkte der Zeile mit welcher Gewichtung der Medianfilterung unterzogen werden. Die beiden Filter sind derart positioniert, dass sie Bildpunkte um einen Anfangspunkt des Bewegungsvektors in Bild A bzw. einen Endpunkt des Bewegungsvektors in Bild B auswählen, wobei diese Punkte in dem Beispiel im Punkt $x_0$ zusammenfallen, da der Bewegungsvektor zu Null geschätzt wurde. Bei einer korrekten Schätzung des Bewegungsvektors zu $V_{xreal}$ wäre die Filtermaske $W_B$ um sechs Bildpunkte nach rechts verschoben.

Bei den dargestellten Filtermasken sind zentrale Bildpunkte, die den Anfangspunkt und den Endpunkt des Bewegungsvektors festlegen, stärker gewichtet als umliegende Bildpunkte, wobei die Filtergewichte - anders als dargestellt - ausgehend von dem zentralen Bildpunkt nach außen hin mit zunehmendem Abstand von dem zentralen Bildpunkt auch abnehmen können. Der zu interpolierende Bildpunkt des Zwischenbildes liegt um $vp_{links} = p_{links} \cdot v_{mess}$ Bildpunkte nach rechts gegenüber dem Anfangspunkt des Bewegungsvektors und um $vp_{rechts} = p_{rechts} \cdot v_{mess}$ Bildpunkte nach links gegenüber dem Endpunkt des Bewegungsvektors verschoben, wobei dessen Position bei der in dem Beispiel angenommenen nicht korrekten Schätzung des Bewegungsvektors der Position des Bildpunktes $x_0$ entspricht.

Der Projektionsfaktor $p_{links}$ in Figur 13 stellt ein Maß für den normierten zeitlichen Abstand zwischen dem Bild A und dem Zwischenbild $\zeta$ dar und der Projektionsfaktor $p_{rechts}$ stellt ein Maß für den normierten zeitlichen Abstand zwischen dem Zwischenbild $\zeta$ und dem Bild B dar, wobei diese Projektionsfaktoren um so geringer sind, je kleiner der zeitliche Abstand ist. Die Projektionsfaktoren sind damit ein Maß für die jeweilige Interpolationsphase, das heißt die zeitliche Lage des Zwischenbildes $\zeta$ bezüglich der Originalbilder A, B, wobei sich diese Interpolationsphasen bei einer Konversion von $f_{org}$ (z.B. 50 Hz) auf $f_{int}$ (z.B. 60 Hz) innerhalb eines durch das Verhältnis dieser Frequenzen vorgegebenen Zyklus von Zwischenbild zu Zwischenbild ändern.

Erfindungsgemäß ist vorgesehen, die Filtermasken adaptiv abhängig von der Interpolationsphase, das heißt abhängig von den Projektionsfaktoren $P_{links}$, $P_{rechts}$ zu gewichten. Dabei besitzt die dem Projektionsfaktor $p_{links}$ zugeordnete Filtermaske $W_A$ eine geringere Ausdehnung, da die Zuverlässigkeit der Bildinformationen des zeitlich näher an dem Zwischenbild liegenden Bildes A als höher eingestuft werden kann als die Zuverlässigkeit des zeitlich entfernter von dem Zwischenbild liegenden Bildes B und die Ausdehnung des Filters wie erläutert mit abnehmender Zuverlässigkeit der Bildinformation zunimmt. Das Filter $W_A$ besitzt für die dargestellte Projektionsphase mit $p_{links}=1/6$ bzw. $p_{rechts}=5/6$ eine Ausdehnung von drei Bildpunkten, die Filtermaske $W_B$ besitzt eine Ausdehnung von elf Bildpunkten. Die Majorität der Filtergewichte liegt mit 4+13+4=21 bei dem Filter $W_A$, das die zuverlässigeren Bildinformationen des Bildes A gewichtet, gegenüber einem Gesamtgewicht von 1+1+1+1+8+1+1+1+1+1=18 bei der Filtermaske $W_B$.

Die Bildpunkte der Zwischenzeile wurden durch eine Medianfilterung der Bildpunkte der Bilder A und B mittels der Masken $W_A$ und $W_B$ erzeugt, wobei ersichtlich ist, dass dank der interpolationsphasenabhängigen Gewichtung der Filtermasken $W_A$, $W_B$ die Kante des Zwischenbildes entsprechend der Phasenlage des Zwischenbildes gegenüber den Bildern A und B korrekt um einen Bildpunkt gegenüber der Kante in dem Bild A und um 5 Bildpunkte gegenüber der Kante in dem Bild B verschoben ist. Somit kann eine bewegungsrichtige Interpolation der bewegten Kante trotz'falsch geschätztem Vektor durch Anwendung der in Abbildung 13 dargestellten adaptierten Filtermasken durchgeführt werden. Ersichtlich wird die bewegte Kante hier positionsrichtig auf $V_{real}/6$ interpoliert.

Informationen, die aus einem Bild mit geringem Projektionsfaktor (dem Bild A in Figur 13) eingeflossen sind, sind deutlich weniger vom Vektorfehler abhängig und somit als zuverlässiger einzustufen als Informationen, die aus einem Bild mit größerem Projektionsfaktor eingeflossen sind (dem Bild B in Figur 13). Zudem ist die Korrelation eines Bildes mit geringerem Projektionsfaktor zum zu interpolierenden Zwischenbild in der Regel größer, da diese zeitlich näher beieinander liegen. Die erfindungsgemäße Verwendung von an die aktuelle Interpolationsphase und somit die jeweiligen Projektionsfaktoren adaptierten Filtermasken, sogenannten Polyphaseninterpolationsfiltern, zur Interpolation nutzt diesen Umstand zur korrekten Interpolation von Zwischenbildern auch bei einer nicht korrekten Bewegungsschätzung.

Gemäß dem erfindungsgemäßen Verfahren ist vorgesehen, einen Satz von Filtern zu entwerfen, von denen wenigstens ein Filter einer Interpolationsphase zugeordnet ist, und zwischen diesen Filtern in Abhängigkeit von der Interpolationsphase und ggf. anderen Kriterien umzuschalten. Der Begriff Filter steht im folgenden insbesondere für eine Gruppe von zwei oder mehr Filtermasken, die für einen Filtervorgang, das heißt die Interpolation eines Bildpunktes, die Auswahl und die Gewichtung von Bildpunkten in den Originalbildern und gegebenenfalls von bereits ermittelten Bildpunkten in dem zu interpolierenden Zwischenbild bestimmen.

Figur 14 zeigt ein Ausführungsbeispiel einer Vorrichtung zur Durchführung des erfindungsgemäßen Verfahrens zur bewegungsvektorgestützten Konversion eines ersten Videosignals Sin, das eine erste Bildfolge mit einer ersten Frequenz $f_{org}$ enthält, in ein zweites Videosignal Sout, das eine zweite Bildfolge mit einer zweiten Frequenz $f_{int}$ enthält. Das erste Videosignal Sin ist einem Eingang der Vorrichtung zugeführt, das zweite Videosignal Sout steht an einem Ausgang der Vorrichtung zur Verfügung.

Die Vorrichtung weist Mittel 20 zur Bewegungsschätzung auf, die einen Bewegungsvektor bereitstellen, der in dem Beispiel gemäß Figur 14 eine x-Komponente $v_x$ und y-Komponente $v_y$ aufweist. Zur Bewegungsschätzung sind der Bewegungsschätzanordnung 20 wenigstens zwei Bilder der Eingangsbildfolge zugeführt, die in Figur 14 allgemein mit S(n) und S(n-1) bezeichnet sind, wobei S(n) ein aktuelles Bild der Eingangsbildfolge und S(n-1) ein vorhergehendes in einem Bildspeicher 50 gespeichertes Bild der Eingangsbildfolge bezeichnet.

Die Vorrichtung weist ferner eine Anordnung 30 zur Bereitstellung eines von der momentanen Interpolations-

phase abhängigen Projektionsfaktors $p_{links}$ auf, wobei die Anordnung 30 dazu ausgebildet ist, für eine vorgegebene Konversion von einer Eingangsfrequenz $f_{org}$ auf eine Ausgangsfrequenz $f_{int}$ gemäß der Formeln (5) und (6) alle $k_{max}$ möglichen Projektionsfaktoren zu ermitteln und in zyklischer Weise bereitzustellen, so dass bei jeder Interpolation eines Ausgangsbildes aus zwei Eingangsbildern der korrekte Interpolationsfaktor zur Verfügung steht.

Die Vorrichtung weist weiterhin eine Filtermaskenauswahlanordnung 40 auf, der wenigstens der ermittelte Projektionsfaktor $p_{links}$ zugeführt ist und die an einen adaptiven Interpolator 10 angeschlossen ist, der eine Medianfilterung zur Bereitstellung jeweils eines Bildes der Ausgangsbildfolge aus zwei Bildern S(n), S(n-1) der Eingangsbildfolge vornimmt. Die für die jeweilige Medianfilterung zu verwendenden Filtermasken werden durch die Filtermaskenauswahlanordnung 40 abhängig von dem Projektionsfaktor $p_{links}$ ausgewählt und dem adaptiven Interpolartor 10 zugeführt. In der Filtermaskenauswahleinheit ist für jede Interpolationsphase, d.h. für jeden Projektionsfaktor $p_{links}$ wenigstens eine Gruppe von zwei Filtermasken gespeichert, die die Auswahl und die Gewichtung der aus dem Bild S(n) bei der Filterung zu berücksichtigenden Bildpunkte und die Auswahl und die Gewichtung der aus dem Bild S(n-1) zu berücksichtigenden Bildpunkte bestimmen. Zudem kann für jede Interpolationsphase auch eine Filtermaske vorgesehen werden, die die Auswahl und die Gewichtung bereits ermittelter Bildpunkte des Zwischenbildes bei der Medianfilterung bestimmen, um diese Bildpunkte ebenfalls bei der Filterung zu berücksichtigen.

Bei dem in Figur 14 dargestellten Ausführungsbeispiel erfolgt die Auswahl der Filtermasken zusätzlich abhängig von den gemäß der Gleichungen (7) und (8) projizierten Geschwindigkeiten $vp_{links}$ und $vp_{rechts}$, um dadurch Filtermasken auswählen zu können, die in der Lage sind, einen Fehler des geschätzten Bewegungsvektors zu korrigieren. Da die Filtermasken abhängig von der geschätzten Geschwindigkeit unterschiedliche Ausdehnungen bzw. unterschiedliche Gewichtungen aufweisen können, um einen vorgegebenen maximalen Schätzfehler korrigieren zu können, sind bei dieser Ausführungsform pro Interpolationsphase, d.h. pro Projektionsfaktor $P_{links}$, mehrere Gruppen von Filtermasken vorhanden, wobei für jede Interpolationsphase abhängig von den projizierten Geschwindigkeiten $vp_x$ und $vp_y$ eine Gruppe von Filtermasken ausgewählt und dem adaptiven Interpolator zugeführt wird.

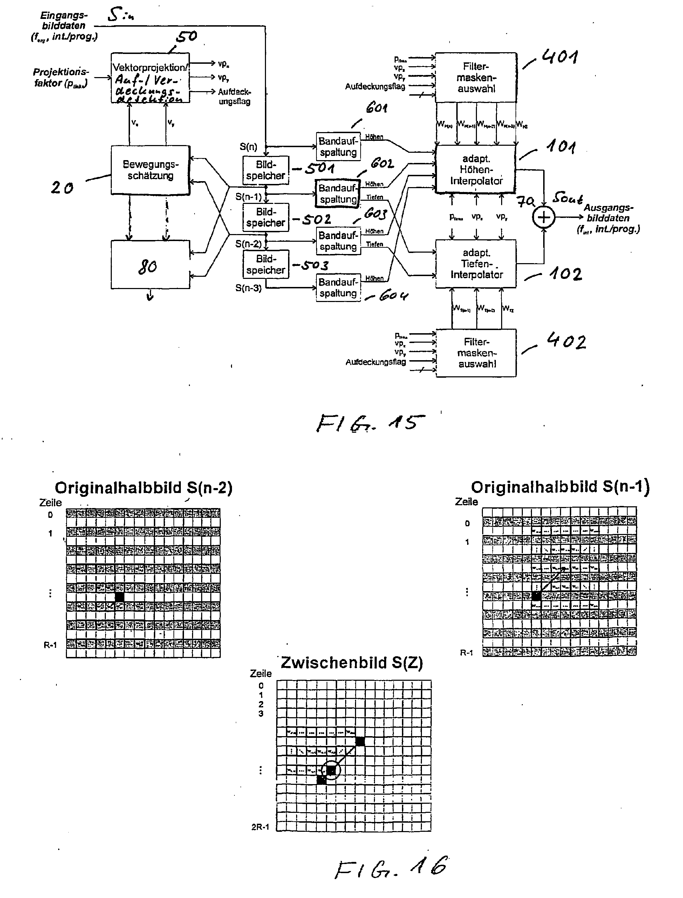

Des weiteren besteht die Möglichkeit, für jede Interpolationsphase verschiedene Filter bzw. Filtermasken vorzusehen, die sich neben ihrer Korrekturfähigkeit auch in ihrer Scätzfehlerkorrektureigenschaft und/oder Detailerhaltungseigenschaft beispielsweise abhängig von dem lokalen Bildinhalt (z.B. Kanten, periodische Strukturen, usw.), dem Betrag des geschätzten Bewegungsvektors, der Vektorfeldhomogenität oder anderen bild- oder bewegungsvektorbezogenen Kriterien unterscheiden. Zur Auswahl derartiger Filter in der Filtermaskenauswahlanordnung 40 sind weitere Bildauswertungen erforderlich, die in der in Figur 14 gestrichelt dargestellten Anordnung 80 vorgenommen werden, wobei ein Ausgangssignal, das zur Auswahl geeigneter Filtermasken während einer Interpolationsphase in der Filtermaskenauswahlanordnung 40 dient, dieser Filtermaskenauswahlanordnung 40 zugeführt ist. Die nach dem erfindungsgemäßen Verfahren durchgeführte Filterung mit adaptiv gewichteten Medianfiltern kann entweder auf das gesamte Bild oder in Verbindung mit einer Bandaufspaltung auf einzelne Subbänder angewendet werden, wie dies bei einer Vorrichtung gemäß Figur 15 dargestellt ist.

Diese Vorrichtung weist einen adaptiven Höheninterpolator 101 mit einem adaptiv gewichteten Medianfilter und einen adaptiven Tiefenpolator 102 mit einem adaptiv gewichteten Medianfilter auf, wobei jedem der Interpolatoren 101, 102 eine Filtermaskenauswahlanordnung 401, 402 zugeordnet ist, wobei den Filtermaskenauswahlanordnungen Projektionsfaktoren $p_{links}$, die projizierten Geschwindigkeiten $Vp_x$ und $Vp_y$ sowie zusätzlich ein sogenanntes Auf- und Verdeckungsflag zugeführt ist, wobei dieses Auf- und Verdeckungsflag wie auch die projizierten Geschwindigkeiten $vp_x$, $vp_y$ in einer Anordnung 50 zur Vektorprojektion bzw. Auf- und Verdeckungsdetektion erzeugt werden, wobei dieser Anordnung 50 der Bewegungsvektor $v_x$, $v_y$ und der Projektionsfaktor $p_{links}$ zugeführt sind.

Die Anordnung weist drei hintereinander geschaltete Bildspeicher 501, 502, 503 auf, so dass vier aufeinander folgende Bilder/Halbbilder der Eingangsbildfolge S(n), S(n-1), S(n-2), S(n-3) zur Verfügung stehen. Diese Bilder/Halbbilder werden jeweils Vorrichtungen 601, 602, 603, 604 zur Bandaufspaltung zugeführt, wobei die Vorrichtungen 601, 604 in dem Ausführungsbeispiel lediglich ein Höhensignal bereitstellen, das dem adaptiven Höhen-Interpolator zugeführt ist, während die Vorrichtungen 602, 603 jeweils ein Höhensignal und ein Tiefensignal bereitstellen, wobei die Tiefensignale dem adaptiven Tiefen-Interpolator und die Höhensignale des adaptiven Höhen-Interpolator zugeführt sind.

Die Auswahl der Filtermasken durch die Filtermaskenauswahlanordnungen 401, 402 für die Interpolatoren 101, 102 erfolgt wie im Zusammenhang mit Figur 14 beschrieben, wobei für jede einzelne Interpolationsphase die Medianfilter bzw. die Filtermasken konstant sein können, wobei allerdings auch für jede einzelne Interpolationsphase mehrere unterschiedliche Medianfilter bzw. Filtermasken vorgesehen werden können, die sich in ihrer Korrekturfähigkeit oder in ihrer Detailerhaltungseigenschaft unterscheiden. Die ausgewählten Filtermasken für den Höhen-Interpolator und den Tiefen-Interpolator sind für jede der einzelnen Interpolationsphasen in der Regel unterschiedlich. Die Filtermasken werden abhängig von den Projektionsfaktoren und/oder abhängig von den projizierten Geschwindigkeiten $vp_x$, $vp_y$ und gegebenenfalls zusätzlich abhängig von dem Auf- und Verdeckungsflag ausgewählt.

Eine in der Anordnung 50 durchgeführte Vektorprojektion und Auf- und Verdeckungsdetektion wird wie in [3] dargestellt durchgeführt, wobei hier eine Verallgemeinerung auf beliebige Projektionsfaktoren vorgenommen werden muss.

Für den Höhenkanal und den Tiefenkanal finden verschiedene Interpolationen statt, wie im folgenden erläutert wird.

Die Interpolation eines Zwischenbildes S(Z) für den Tiefenkanal aus aufeinanderfolgenden Halbbildern S(n-1), S(n-2) ist in Figur 16 veranschaulicht. Die aus den Originalhalbbildern S(n-2), S(n-2) und dem Zwischenbild zur Filterung herangezogenen Bildpunkte sind fett umrahmt dargestellt, wobei die Gewichtungsfaktoren (die Null sind, wenn ein Bildpunkt nicht berücksichtigt werden soll) den Interpolatoren 101, 102 von den Filtermaskenauswahleinheiten 401, 402 mitgeteilt werden. Beispielsweise werden den Interpolatoren 101, 102 für jede Interpolationsphase immer Gewichtungsfaktoren für gleich viele Bildpunkte mitgeteilt, die in den Originalhalbbildern S(n-2), S(n-1) in einer rechteckigen Anordnung oder einer kreuzförmigen Anordnung um Anfangs- und Endpunkt des Bewegungsvektors liegen und die in dem Zwischenbild S(Z) links oder oberhalb des gerade zu interpolierenden Bildpunktes liegen, wobei sich einzelne Filtermasken für verschiedene Interpolationsphasen in den Werten für die Gewichtungsfaktoren und in den Positionen, für die die Gewichtungsfaktoren ungleich Null sind, unterscheiden. Selbstverständlich können den Interpolatoren auch nur die Gewichtungsfaktoren für solche Bildpunkte zugeführt werden, die mit einem Gewichtungsfaktor ungleich Null zu gewichten sind.

Ausgehend von dem in Figur 16 eingekreist dargestellten zu interpolierenden Bildpunkt, dessen Position auch in den Halbbildern S(n-2), S(n-1) fett dargestellt ist, erfolgt eine Adressierung das heißt eine Positionierung der Filtermasken im dem dem Zwischenbild vorhergehenden Bild S(n-2) und dem nachfolgenden Bild.

Auf Basis der ermittelten, jeweils von der Interpolationsphase abhängigen Filtergewichte $W_{[n-2]}(i,j)$ für die fett hervorgehobenen Bildpunkte des vorhergehenden Bildes S(n-1) und der Filtergewichte $W_{[n-1]}(i,j)$ für die fett hervorgehobenen Bildpunkte des nachfolgenden Bildes S(n-2) sowie der Filtergewichte für die fett hervorgehobenen Bildpunkte $W_z(i,j)$ des Zwischenbildes, die den rekursiven Anteil bestimmen, wird der Ausgangswert des gewichteten Medianfilters bestimmt durch:

$$S(x,y,T_z) = \text{Med} \begin{bmatrix} W_{[N-2]} \lozenge S(x-p_{links} \cdot v_x, y-p_{links} \cdot v_y, T_{[N-2]}) \\ W_{[N-1]} \lozenge S(x+p_{rechts} \cdot v_x, y+p_{rechts} \cdot v_y, T_{[N-1]}) \\ W_z \quad \lozenge S(x-1,y,T_z) \end{bmatrix} \qquad (9)$$

Falls hierbei die ausgehend von dem zu interpolierenden Bildpunkt (x,y) in das Vorgängerbild S(n-2) und das Nachfolgerbild S(n-1) projizierten Filterpositionen nicht genau auf eine Pixelposition treffen, werden die zugehörigen Pixel, wie in Figur 16 dargestellt, durch eine bilineare Interpolation gemäß

$$S(x+dx,y+dy) = dx \cdot dy \cdot S(x+1,y+1) + (1-dx) \cdot dy \cdot S(x,y+1) + dx \cdot (1-dy) \cdot S(x+1,y) + (1-dx) \cdot (1-dy) \cdot S(x,y) \qquad (10)$$

ermittelt.

Um ein progressives Ausgangsbild zu erzeugen, werden vom Zwischenbild S(Z) alle Bildzeilen (0,1,2,3,...,2R-1) gemäß Figur 16 und Formel 15 abgearbeitet. Soll ein Ausgangsbild im Zeilensprung erzeugt werden, werden in Abhängigkeit von der Rasterlage des zu interpolierenden Zwischenhalbbildes lediglich die ungeraden(1,3,...,2R-1) oder die geraden (0,2,...,2R-2) Bildzeilen des Zwischenbildes S(Z) abgearbeitet.

Die Interpolation im Höhenkanal erfolgt in der im folgenden erläuterten Weise.

Ausgehend von dem zu interpolierenden Bildpunkt findet im Höhenkanal ebenfalls eine Adressierung der Filtermasken in dem dem Zwischenbild vorhergehenden bzw. nachfolgenden Bild S(n-2) bzw. S(n-1) statt. Um einen Auflösungsverlust in vertikaler Richtung zu vermeiden, findet allerdings keine bilineare Interpolation statt, falls die Vektoren nicht genau auf eine Pixelposition treffen. Stattdessen findet eine in horizontaler Richtung und vertikaler Richtung unterschiedliche Behandlung statt.

In horizontaler Richtung wird eine einfache lineare Interpolation gemäß Figur 18 und der Gleichung

$$S(x+dx,y) = dx \cdot S(x+1,y) + (1-dx) \cdot S(x,y) \qquad (11)$$

durchgeführt.

In vertikaler Richtung werden die Adressierungspositionen der Filter im vorhergehenden und nachfolgenden Bild auf Vollbildzeilengenauigkeit gerundet. Liegt die aufgerundete Adressierungsposition auf einer Zeile, die im Halbbild nicht enthalten ist, so wird der darüber und der darunter liegende (ggf. horizontal interpolierte) Bildpunkt dem Medianfilter zugeführt. Befindet sich die gerundete Adressierungsposition jedoch auf einer Zeile, die im Halbbild enthalten ist, so wird der entsprechende (ggf. horizontal interpolierte) Bildpunkt zweifach in das Medianfilter eingeführt.

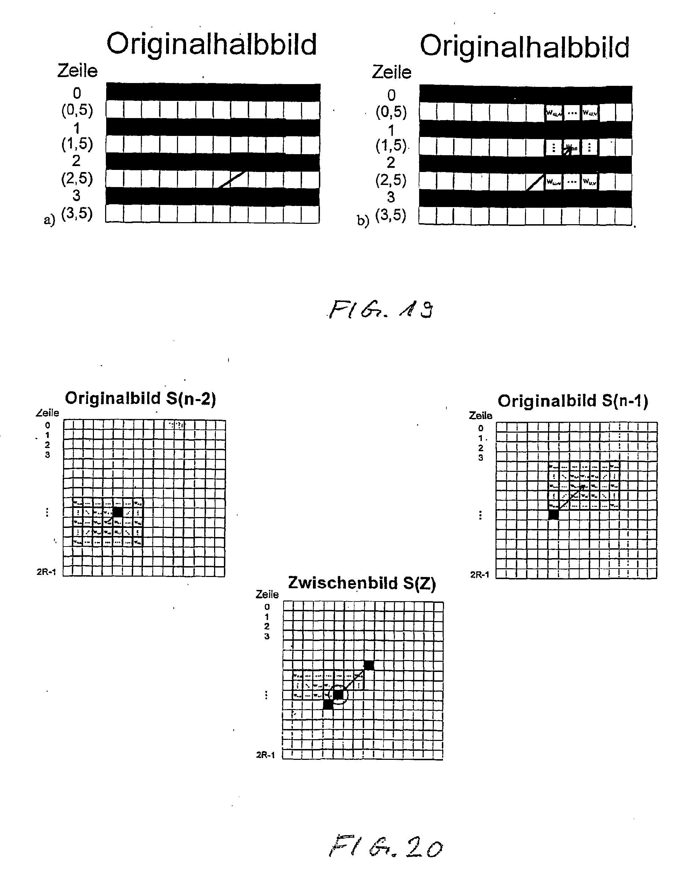

Diese beiden möglichen Fälle veranschaulicht Figur 19. Betrachtet werden soll in diesem Beispiel nur der Beitrag durch das zentrale Filtergewicht $W_{0,0}$.

In dem in Figur 19a dargestellten Fall, bei dem die Adressierung des Zentralgewichts auf den Punkt S(x,2) und somit auf eine Zeile verweist, die im Halbbild enthalten ist, würde dem Filter der Luminanzwert an der Position (x,2) zweifach zugeführt

$$S(x,y,T_z) = Med(\ldots, 2 \cdot W_{[N-2]}(0,0) \lozenge S(x,2,T_{[N-2]}), \ldots) \quad (12)$$

In dem in Figur 19b dargestellten Fall b) hingegen verweist die Adressierung des Zentralgewichts auf den Punkt S(x, 1.5) und somit auf eine nicht existierende Zwischenzeile. Daher wird dem Filter

$$S(x,y,T_z) = Med(\ldots, W_{[N-2]}(0,0) \lozenge S(x,1,T_{[N-2]}),$$
$$W_{[N-2]}(0,0) \lozenge S(x,2,T_{[N-2]}), \ldots) \quad (13)$$

zugeführt. Analog wird mit den anderen Filterpositionen verfahren. Um eine ungerade Anzahl von Filtergewichten zu erhalten, kann noch ein nicht bewegungskompensierter zusätzlicher Wert aus dem weiter zurückliegenden Bild S(N-3) oder dem folgenden Bild S(N) zugeführt werden, wie dies in Figur 15 dargestellt ist. Hierbei wird von den beiden zusätzlichen Bildern jeweils auf das Bild zugegriffen deren Punkte in der zu interpolierenden Rasterlage liegen.

Das dargestellte Interpolationsverfahren kann selbstverständlich auch ohne Bandaufspaltung implementiert werden. Hierbei wird für das gesamte Bild vorzugsweise auf die oben erläuterten Signalverarbeitungsmethoden des Tiefenkanals zurückgegriffen.

Bei progressivem Eingangsbildformat kann entweder eine zweidimensionale Bandaufspaltung durchgeführt werden, oder es wird keine Bandaufspaltung vorgenommen und für das gesamte Bild auf die Signalverarbeitungsmethoden des Tiefenkanals zurückgegriffen.

Da durch den fehlenden Zeilensprung keine unterschiedliche Verarbeitung in vertikaler Richtung im Höhen- und Tiefenkanal stattfindet, kann für beide Kanäle das gleiche, in Figur dargestellte Interpolationsschema verwendet werden. Die Maskengewichte sind hierbei jedoch unterschiedlich, und an die Wa-Wahrnehmungseigenschaften im jeweiligen Kanal angepasst. Alle Bandaufspaltungen können jeweils als lineare oder auch als nichtlineare Bandaufspaltungen ausgeführt sein. Im Falle einer nichtlinearen Bandaufspaltung sind die Begriffe "Höhenband/Höhenkanal" und "Tiefenband/Tiefenkanal" sinngemäß zu verstehen, da hierbei dann keine Aufspaltung in Ortsfrequenzbänder resultiert.

Das erfindungsgemäße Verfahren basiert auf der Verwendung vektorgestützter gewichteter Medianfilter, wobei im Unterschied zu bisherigen Verfahren eine adaptive Umschaltung der Interpolationsfilter in Abhängigkeit von der jeweiligen Interpolationsphase und/oder vom jeweiligen lokalen Bildinhalt bzw. den lokalen Vektorfeldeigenschaften vorgesehen ist. Hierdurch kann auch eine Anpassung des Verfahrens an unterschiedliche Bildratenverhältnisse durchgeführt werden. Der Gewinn des erfindungsgemäßen Interpolationsverfahrens gegenüber bestehenden Interpolationsverfahren ist insbesondere dann hoch, wenn die Anzahl interpolierter Bilder hoch ist gegenüber der Anzahl von Bildern, die direkt oder rasteruminterpoliert aus der Eingangssequenz übernommen werden können. Dies ist z.B. bei der Konversion von 50 auf 60 Hz sowie bei der Realisierung einer synthetischen Zeitlupe der Fall.

Anhang

Stand der Technik

[1] Blume, H.: "Nichtlineare fehlertolerante Interpolation von Zwischenbildern", Dissertation an der Universität Dortmund, VDI-Fortschrittberichte, VDI Verlag, 1997

[2] Blume, H.: "A new Algorithm for Nonlinear Vectorbased Upconversion with Center Weighted Medians", SPIE Journal ofElectronic Imaging, Vol. 6, No.3, pp. 368-378,1997

[3] Blume, H.; Jostschulte, K. : " Verfahren und Schaltungsanordnung zur Flimmerreduktion für ein Gerät zur Videosignalverarbeitung", DE 1905758 AI, 1996

[4] DE 44 14 173 vom 28.9.1994, Titel:" Verfahren und Schaltungsanordnung zur Flimmerreduktion für ein Gerät zur Videosignalverarbeitung"

[5] Botteck, M.: "Mehrdimensionale Interpolationstechniken für eine verbesserte Wiedergabe von Videosignalen", Dissertation an der Universität Dortmund, Shaker Verlag, 1993

[6] de Haan, G.; Biezen, P.; Ojo, 0.: "An Evolutionary Architecture for Motion Compensated 100 Hz Television", IEEE Transactions on Circuits and Systems for Video Technology, Vol. 5, No.3, pp. 207-217, Juni 1995

[7] Hahn, M.; Ruck, C.; Rümmler, K.; Talmi, M.; Wolf, S.: "Single-Chip Videokonverter ,Hicon' für Multimedia-Displays", ITG Fachtagung, 8. Dortmunder Fernsehseminar, pp. 217-222,1999

[8] Ohm, J.-R.; Braun, M.; Rümmler, K.; Blume, H.; Schu, M.; Tuschen, C.: "Low-Cost System für universelle Video-Formatkonversion", ITG Fachtagung, 7. Dortmunder Fernsehseminar, pp. 251-256, 1997

[9] Schröder, H.; Blume, H.: "Mehrdimensionale Signalverarbeitung, Band 2: Architekturen und Anwendungen für Bilder und Bildsequenzen", Teubner Verlag Stuttgart, 2000

[10] Schu, M.; Scheffler, G.; Tuschen, C.; Stolze, A.: "System on Silicion-IC for Motion Compensated Scan Rate Conversion, Picture-in-Picture Processing, Split Screen Applications and Display Processing", IEEE Transactions on Consumer Electronics, Vol. 45, No.3, pp. 842-850, 1999

[11] Helmut Schönfelder: Digitale Filter in der Videotechnik. Drei-R-verlag, Berlin, 1988, Seiten 125-127.

[12] Rosenfeld, Kak: Digital Picture Processing. Academic Press, Inc., 2nd edition, 1982, Seiten 261 bis 263.

**Patentansprüche**

1. Verfahren zur bewegungsvektorgestützten Konversion eines ersten Videosignals, das eine erste Bildfolge ($A_1$, $B_1$, $A_2$, $B_2$, $A_3$, $B_3$,...) mit einer ersten Frequenz ($f_{org}$) enthält, in ein zweites Videosignal, das eine zweite Bildfolge ($\alpha_1$, $\beta_1$, $\gamma_1$, $\delta_1$, $\epsilon_1$, $\zeta_1$,...) mit einer zweiten Frequenz ($f_{int}$) enthält, wobei wenigstens einige Bilder der zweiten Bildfolge ($\alpha_1$, $\beta_1$, $\gamma_1$, $\delta_1$, $\epsilon_1$, $\zeta_1$, ...), die phasenverschoben gegenüber Bilder der ersten Bildfolge ($A_1$, $B_1$, $A_2$, $B_2$, $A_3$, $B_3$,...) sind, durch eine Interpolation von Bildern der ersten Bildfolge ($A_1$, $B_1$, $A_2$, $B_2$, $A_3$, $B_{3'}$...) derart gebildet werden, dass für einen Bildpunkt eines Bildes ($\zeta_1$) der zweiten Bildfolge ($\alpha_1$, $\beta_1$, $\gamma_1$, $\delta_1$, $\in_1$, $\zeta_1$,...) Bildpunkte wenigstens eines ersten Bildes ($A_3$) und eines zweiten Bildes ($B_3$) der ersten Bildfolge ($A_1$, $B_1$, $A_2$, $B_2$, $A_3$, $B_3$,...) mittels eines Medianfilters gefiltert werden,
**dadurch gekennzeichnet, dass**
das Medianfilter ein adaptiv gewichtetes Medianfilter ist.

2. Verfahren nach Anspruch 1, bei dem das Medianfilter abhängig von einer Interpolationsphase zwischen dem zu interpolierenden Bild ($\zeta_1$) der zweiten Bildfolge ($\alpha_1$, $\beta_1$, $\gamma_1$, $\delta_1$, $\in_1$, $\zeta_1$,...) und dem ersten und/oder zweiten Bild ($A_3$, $B_3$) der ersten Bildfolge ($A_1$, $B_1$, $A_2$, $B_2$, $A_3$, $B_3$,...) adaptiv gewichtet ist.

3. Verfahren nach Anspruch 1, bei dem das Medianfilter abhängig von einer Interpolationsphase zwischen dem zu interpolierenden Bild ($\zeta_1$) der zweiten Bildfolge ($\alpha_1$, $\beta_1$, $\gamma_1$, $\delta_1$, $\in_1$, $\zeta_1$,...) und dem ersten und/oder zweiten Bild ($A_3$, $B_3$) der ersten Bildfolge ($A_1$, $B_1$, $A_2$, $B_2$, $A_3$, $B_3$, ... ) und von dem Bewegungsvektor adaptiv gewichtet ist.

4. Verfahren nach Anspruch 1, 2 oder 3, bei dem das Medianfilter abhängig von einem lokalen Bildinhalt adaptiv gewichtet ist.

5. Verfahren nach einem der vorangehenden Ansprüche, bei dem das Medianfilter abhängig von lokalen Eigenschaften des Bewegungsvektors ($V_{AnBn}$) adaptiv gewichtet ist.

6. Verfahren nach einem der vorangehenden Ansprüche, bei dem für jede von mehreren verschiedenen Interpolationsphasen eine erste Filtermaske ($W_A$) erzeugt wird, die die Auswahl und die Gewichtung der Bildpunkte des ersten Bildes ($A_3$) bestimmt, und bei dem für jede Interpolationsphase eine zweite Filtermaske ($W_B$) erzeugt wird, die die Auswahl und die Gewichtung der Bildpunkte des zweiten Bildes ($A_3$) bestimmt, und bei dem die erzeugten Filtermasken abhängig von der momentanen Interpolationsphase für die Medianfilterung ausgewählt werden.

7. Verfahren nach Anspruch 6, bei dem die Filtermasken ($W_a$, $W_B$) derart ausgebildet sind, dass zentrale durch die Filtermasken ausgewählte Bildpunkte stärker gewichtet werden, als umliegende Bildpunkte, wobei die Summe der Zentralgewichte größer ist als die Summe der übrigen Gewichte.

8. Verfahren nach Anspruch 6 oder 7, bei dem die Filtermasken ($W_A$, $W_B$) derart gewählt sind, dass die Anzahl der jeweils durch die Filtermasken berücksichtigten Bildpunkte der Bilder ($A_3$, B3) der ersten Bildfolge ($A_1$, $B_1$, $A_2$, $B_2$, $A_3$, $B_3$, ...) um so größer ist, je kleiner der jeweilige Projektionsfaktor ($P_{links}$, $P_{rechts}$) ist, wobei der Projektionsfaktor jeweils der auf den zeitlichen Abstand zwischen dem ersten und zweiten Bild ($A_3$, B3) normierte zeitliche Abstand zwischen dem interpolierten Bild ($\zeta_1$) und dem ersten Bild ($A_3$) bzw. dem interpolierten Bild ($\zeta_1$) und dem zweiten Bild ($B_3$) ist.

9. Verfahren nach einem der Ansprüche 6 bis 8, bei dem die Filtermasken ($W_A$, $W_B$) derart gewählt sind, dass die Majorität der Filtergewichte bei derjenigen der beiden Filtermasken liegt, die dem geringeren Projektionsfaktor ($p_{links}$, $p_{rechts}$) zugeordnet ist.

10. Verfahren nach einem der Ansprüche 6 bis 9, bei dem für jede Interpolationsphase mehr als eine erste Filtermaske und mehr als eine zweite Filtermaske bereitgestellt werden, die jeweils für eine Filterung unterschiedlich strukturierter Bildbereiche geeignet sind und wobei die Filtermasken abhängig von einer Detektion derartiger Bildbereiche ausgewählt werden.

11. Verfahren nach einem der Ansprüche 6 bis 10, bei dem für jede Interpolationsphase mehr als eine erste Filtermaske und mehr als eine zweite Filtermaske bereitgestellt werden, die jeweils für eine Filterung im Zusammenhang mit Bewegungsvektoren unterschiedlicher Zuverlässigkeit geeignet sind, wobei die Filtermasken abhängig von einer geschätzten Zuverlässigkeit des Bewegungsvektors ausgewählt werden.

12. Verfahren nach einem der vorangehenden Ansprüche, bei dem bereits erzeugte Bildpunkte des interpolierten Bildes ($\zeta_1$) der zweiten Bildfolge ($\alpha_1$, $\beta_1$, $\gamma_1$, $\delta_1$, $\in_1$, $\zeta_1$,...) ebenfalls dem Medianfilter zugeführt werden.

13. Verfahren nach einem der vorangehenden Ansprüche, bei dem das erste Bildsignal mittels einer linearen oder nichtlinearen Bandaufspaltung in wenigstens zwei Teilbandsignale zerlegt und das Verfahren für jedes der Teilbandsignale durchgeführt wird.

14. Verfahren nach einem der vorangehenden Ansprüche, bei dem das erste Videosignal ein Zeilensprungsignal ist.

15. Verfahren nach einem der Ansprüche 1 bis 13, bei dem das erste Videosignal ein progressives Signal ist.

16. Verwendung des Verfahrens nach einem der vorangehenden Ansprüche zur Erzeugung eines synthetischen Zeitlupensignals.

17. Vorrichtung zur bewegungsvektorgestützten Konversion eines ersten Videosignals (Sin), das eine erste Bildfolge ($A_1$, $B_1$, $A_2$, $B_2$, $A_3$, $B_3$,...) mit einer ersten Frequenz ($f_{org}$) enthält, in ein zweites Videosignal (Sout), das eine zweite Bildfolge ($\alpha_1$, $\beta_1$, $\gamma_1$, $\delta_1$, $\in_1$, $\zeta_1$, ... ) mit einer zweiten Frequenz ($f_{int}$) enthält, wobei die Vorrichtung folgende Merkmale aufweist:

- Mittel zur Bewegungsschätzung (20; 201, 202), die einen Bewegungsvektor ($v_x$, $v_y$) bereitstellen,
- eine Interpolationsanordnung (10; 101, 102) mit einem Medianfilter das dazu ausgebildet ist, Bilder der zweiten Bildfolge ($\alpha_1$, $\beta_1$, $\gamma_1$, $\delta_1$, $\varepsilon_1$, $\zeta_1$,...), die phasenverschoben gegenüber Bildern der ersten Bildfolge ($A_1$, $B_1$, $A_2$,

$B_2$, $A_3$, $B_3$,...) sind, derart zu bilden, dass für einen Bildpunkt eines Bildes ($\zeta1$) der zweiten Bildfolge ($\alpha_1$, $\beta_1$, $\gamma_1$, $\delta_1$, $\varepsilon_1$, $\zeta_1$,...) Bildpunkte wenigstens eines ersten Bildes ($A_3$) und eines zweiten Bildes ($B_3$) der ersten Bildfolge ($A_1$, $B_1$, $A_2$, $B_2$, $A_3$, $B_3$,...) gefiltert werden,
- Mittel (30; 301, 302) zur Bereitstellung eines Projektionsfaktors ($p_{links}$, $p_{rechts}$), wobei der Projektionsfaktor jeweils der auf den zeitlichen Abstand zwischen dem ersten und zweiten Bild ($A_3$, B3) normierte zeitliche Abstand zwischen dem Bild ($\zeta1$) und dem ersten Bild ($A_3$) bzw. dem Bild ($\zeta1$) und dem zweiten Bild (B3) ist,
- eine an die Interpolationsanordnung gekoppelte Filtermaskenauswahleinheit (40; 401, 402), der wenigstens der Projektionsfaktor ($p_{links}$) als Eingangssignal zugeführt ist, und die der Interpolationsanordnung (10; 101, 102) von den Eingangssignalen abhängige Filtermasken zur Verfügung stellt.

18. Vorrichtung nach Anspruch 17, die eine Vektorprojektionseinheit aufweist, der ein Projektionsfaktor ($p_{links}$) und ein Bewegungsvektor ($v_x$,$v_y$) zugeführt sind, und die einen projizierten Bewegungsvektor ($vp_x$,$vp_y$) bereitstellt, der der Filtermaskenauswahleinheit (40; 401, 402) zugeführt ist.

19. Vorrichtung nach Anspruch 17 oder 18, die folgende weitere Merkmale aufweist:

- Mittel zur Bandaufspaltung (60; 601, 602), die wenigstens ein erstes Bandsignal und wenigstens ein zweites Bandsignal aus dem ersten Videosignal (Sin) bereitstellen,
- eine erste an eine erste Filtermaskenauswahleinheit (401) angeschlossene Interpolationsanordnung (101) und eine zweite an eine zweite Filtermaskenauswahleinheit (402) angeschlossene Interpolationsanordnung (102), wobei das wenigstens eine erste Bandsignal der ersten Interpolationsanordnung (101) und das wenigstens eine zweite Bandsignal der zweiten Interpolationsanordnung (102) zugeführt ist,
- eine Verknüpfungsschaltung (70), der ein Ausgangssignal der ersten Interpolationsanordnung (101) und ein Ausgangssignal der zweiten Interpolationsanordnung (102) zugeführt ist und die das zweite Videosignal (Sout) aus dem Ausgangssignal der ersten Interpolationsanordnung (101) und dem Ausgangssignal der zweiten Interpolationsanordnung (102) bereitstellt.

## Claims

1. Method for the motion-vector-assisted conversion of a first video signal, which contains a first image sequence ($A_1$, $B_1$, $A_2$, $B_2$, $A_3$, $B_3$, ...) at a first frequency ($f_{org}$), to a second video signal, which contains a second image sequence ($\alpha_1$, $\beta_1$, $\gamma_1$, $\delta_1$, $\varepsilon_1$, $\zeta_1$, ...) at a second frequency ($f_{int}$), wherein at least some images of the second image sequence ($\alpha_1$, $\beta_1$, $\gamma_1$, $\delta_1$, $\varepsilon_1$, $\zeta_1$, ...) which are phase-shifted relative to images of the first image sequence ($A_1$, $B_1$, $A_2$, $B_2$, $A_3$, $B_3$, ...) are formed by an interpolation of images of the first image sequence ($A_1$, $B_1$, $A_2$, $B_2$, $A_3$, $B_3$, ...) such that, for a pixel of an image ($\zeta_1$) of the second image sequence ($\alpha_1$, $\beta_1$, $\gamma_1$, $\delta_1$, $\varepsilon_1$, $\zeta_1$, ...), pixels of at least one first image ($A_3$) and one second image ($B_3$) of the first image sequence ($A_1$, $B_3$, $A_2$, $B_2$, $A_3$, $B_3$, ...) are filtered by means of a median filter, **characterised in that** the median filter is an adaptively weighted median filter.

2. Method according to claim 1, in which the median filter is adaptively weighted as a function of an interpolation phase between the image ($\zeta_1$) to be interpolated of the second image sequence ($\alpha_1$, $\beta_1$, $\gamma_1$, $\delta_1$, $\varepsilon_1$, $\zeta_1$, ...) and the first and/or second image ($A_3$, $B_3$) of the first image sequence ($A_1$, $B_1$, $A_2$, $B_2$, $A_3$, $B_3$, ...).

3. Method according to claim 1, in which the median filter is adaptively weighted as a function of an interpolation phase between the image ($\zeta_1$) to be interpolated of the second image sequence ($\alpha_1$, $\beta_1$, $\gamma_1$, $\delta_1$, $\varepsilon_1$, $\zeta_1$, ...) and the first and/or second image ($A_3$, $B_3$) of the first image sequence ($A_1$, $B_1$, $A_2$, $B_2$, $A_3$, $B_3$, ...) and as a function of the motion vector.

4. Method according to claim 1, 2 or 3, in which the median filter is adaptively weighted as a function of a local image content.

5. Method according to one of the preceding claims, in which the median filter is adaptively weighted as a function of local properties of the motion vector ($V_{AnBn}$).

6. Method according to one of the preceding claims, in which, for each of a plurality of different interpolation phases, a first filter mask ($W_A$) is generated which determines the selection and the weighting of the pixels of the first image ($A_3$), and in which, for each interpolation phase, a second filter mask ($W_B$) is generated which determines the selection and the weighting of the pixels of the second image ($A_3$), and in which the generated filter masks are selected for the median filtering as a function of the instantaneous interpolation phase.

7. Method according to claim 6, in which the filter masks ($W_A$, $W_B$) are designed in such a way that central pixels selected by the filter masks are more strongly weighted than surrounding pixels, wherein the sum of the central weights is greater than the sum of the remaining weights.

8. Method according to claim 6 or 7, in which the filter masks ($W_A$, $W_B$) are selected in such a way that the smaller the respective projection factor ($P_{left}$, $P_{right}$), the greater the number of pixels of the images ($A_3$, $B_3$) of the first image sequence ($A_1$, $B_1$, $A_2$, $B_2$, $A_3$, $B_3$, ... ) which are taken into account by the filter masks, wherein the projection factor is in each case the temporal distance between the interpolated image ($\zeta_1$) and the first image ($A_3$) or between the interpolated image ($\zeta_1$) and the second image ($B_3$), normalised to the temporal distance between the first and second image ($A_3$, $B_3$).

9. Method according to one of claims 6 to 8, in which the filter masks ($W_A$, $W_B$) are selected in such a way that the majority of the filter weights lie with that one of the two filter masks which is assigned to the smaller projection factor ($P_{left}$, $P_{right}$).

10. Method according to one of claims 6 to 9, in which, for each interpolation phase, more than one first filter mask and more than one second filter mask are provided, which are in each case suitable for filtering differently structured image regions, and wherein the filter masks are selected as a function of a detection of such image regions.

11. Method according to one of claims 6 to 10, in which, for each interpolation phase, more than one first filter mask and more than one second filter mask are provided, which are in each case suitable for filtering in connection with motion vectors of different reliability, wherein the filter masks are selected as a function of an estimated reliability of the motion vector.

12. Method according to one of the preceding claims, in which already generated pixels of the interpolated image ($\zeta_1$) of the second image sequence ($\alpha_1$, $\beta_1$, $\gamma_1$, $\delta_1$, $\varepsilon_1$, $\zeta_1$, ...) are likewise supplied to the median filter.

13. Method according to one of the preceding claims, in which the first image signal is broken down into at least two subband signals by means of linear or nonlinear band separation, and the method is carried out for each of the subband signals.

14. Method according to one of the preceding claims, in which the first video signal is an interlaced signal.

15. Method according to one of claims 1 to 13, in which the first video signal is a progressive signal.

16. Use of the method according to one of the preceding claims to generate a synthetic slow-motion signal.

17. Device for the motion-vector-assisted conversion of a first video signal (Sin), which contains a first image sequence ($A_1$, $B_1$, $A_2$, $B_2$, $A_3$, $B_3$, ...) at a first frequency ($f_{org}$), to a second video signal (Sout), which contains a second image sequence ($\alpha_1$, $\beta_1$, $\gamma_1$, $\delta_1$, $\varepsilon_1$, $\zeta_1$, ...) at a second frequency ($f_{int}$), wherein the device has the following features:

    - means for motion estimation (20; 201, 202), which provide a motion vector ($v_x$, $v_y$),
    - an interpolation arrangement (10; 101, 102) with a median filter which is designed to form images of the second image sequence ($\alpha_1$, $\beta_1$, $\gamma_1$, $\delta_1$, $\varepsilon_1$, $\zeta_1$, ... ) which are phase-shifted relative to images of the first image sequence ($A_1$, $B_1$, $A_2$, $B_2$, $A_3$, $B_3$.... ) such that, for a pixel of an image ($\zeta_1$) of the second image sequence ($\alpha_1$, $\beta_1$, $\gamma_1$, $\delta_1$, $\varepsilon_1$, $\zeta_1$, ...), pixels of at least one first image ($A_3$) and one second image ($B_3$) of the first image sequence ($A_1$, $B_1$, $A_2$, $B_2$, $A_3$, $B_3$, ... ) are filtered,
    - means (30; 301, 302) for providing a projection factor ($p_{left}$, $p_{right}$), wherein the projection factor is in each case the temporal distance between the image ($\zeta_1$) and the first image ($A_3$) or between the image ($\zeta_1$) and the second image ($B_3$), normalised to the temporal distance between the first and second image ($A_3$, $B_3$),
    - a filter mask selection unit (40; 401, 402) which is coupled to the interpolation arrangement and which is supplied with at least the projection factor ($p_{left}$) as input signal, and which provides the interpolation arrangement (10; 101, 102) with filter masks as a function of the input signals.

18. Device according to claim 17, which has a vector projection unit, to which a projection factor ($p_{left}$) and a motion vector ($v_x$, $v_y$) are supplied, and which provides a projected motion vector ($vp_x$, $vp_y$) which is supplied to the filter mask selection unit (40; 401, 402).

**19.** Device according to claim 17 or 18, which has the following further features:

- means for band separation (60; 601, 602), which provide at least one first band signal and at least one second band signal from the first video signal (Sin),
- a first interpolation arrangement (101) connected to a first filter mask selection unit (401) and a second interpolation arrangement (102) connected to a second filter mask selection unit (402), wherein the at least one first band signal is supplied to the first interpolation arrangement (101) and the at least one second band signal is supplied to the second interpolation arrangement (102),
- a logic circuit (70), to which an output signal of the first interpolation arrangement (101) and an output signal of the second interpolation arrangement (102) are supplied, and which provides the second video signal (Sout) from the output signal of the first interpolation arrangement (101) and the output signal of the second interpolation arrangement (102).

**Revendications**

**1.** Procédé de conversion, appuyée sur un vecteur de déplacement, d'un premier signal vidéo qui contient une première séquence d'images ($A_1$, $B_1$, $A_2$, $B_2$, $A_3$, $B_3$, ...) ayant une première fréquence ($f_{org}$), en un deuxième signal vidéo qui contient une deuxième séquence d'images ($\alpha_1$, $\beta_1$, $\gamma_1$, $\delta_1$, $\varepsilon_1$, $\zeta_1$) ayant une deuxième fréquence ($f_{int}$), selon lequel on forme au moins quelques images de la deuxième séquence d'images ($\alpha_1$, $\beta_1$, $\gamma_1$, $\delta_1$, $\varepsilon_1$, $\zeta_1$), qui sont en décalage de phase par rapport aux images de la première séquence d'images ($A_1$, $B_1$, $A_2$, $B_2$, $A_3$, $B_3$, ...), par une interpolation d'images de la première séquence d'images ($A_1$, $B_1$, $A_2$, $B_2$, $A_3$, $B_3$, ...) de sorte que, pour un point d'image d'une image ($\zeta_1$) de la deuxième séquence d'images ($\alpha_1$, $\beta_1$, $\gamma_1$, $\delta_1$, $\varepsilon_1$, $\zeta_1$), des points d'image d'au moins une première image ($A_3$) et d'une deuxième image ($B_3$) de la première séquence d'images ($A_1$, $B_1$, $A_2$, $B_2$, $A_3$, $B_3$, ...) sont filtrées au moyen d'un filtre médian,
**caractérisé en ce que**
le filtre médian est un filtre médian pondéré de façon adaptative.

**2.** Procédé selon la revendication 1,
**caractérisé en ce que**
le filtre médian est pondéré de façon adaptative en fonction d'une phase d'interpolation entre l'image à interpoler ($\zeta_1$) de la deuxième séquence d'images ($\alpha_1$, $\beta_1$, $\gamma_1$, $\delta_1$, $\varepsilon_1$, $\zeta_1$) et la première et/ou la deuxième image ($A_3$, $B_3$) de la première séquence d'images ($A_1$, $B_1$, $A_2$, $B_2$, $A_3$, $B_3$, ...) .

**3.** Procédé selon la revendication 1,
**caractérisé en ce que**
le filtre médian est pondéré de façon adaptative en fonction d'une phase d'interpolation entre l'image à interpoler ($\zeta_1$) de la deuxième séquence d'images ($\alpha_1$, $\beta_1$, $\gamma_1$, $\delta_1$, $\varepsilon_1$, $\zeta_1$) et la première et/ou la deuxième image ($A_3$, $B_3$) de la première séquence d'images ($A_1$, $B_1$, $A_2$, $B_2$, $A_3$, $B_3$, ...) et en fonction du vecteur de déplacement.

**4.** Procédé selon la revendication 1, 2 ou 3,
**caractérisé en ce que**
le filtre médian est pondéré de façon adaptative en fonction d'un contenu local d'image.

**5.** Procédé selon l'une des revendications précédentes,
**caractérisé en ce que**
le filtre médian est pondéré de façon adaptative en fonction des propriétés locales du vecteur de déplacement ($V_{AnBn}$).

**6.** Procédé selon l'une des revendications précédentes,
**caractérisé en ce que**
pour chacune de plusieurs différentes phases d'interpolation on génère un premier masque filtrant ($W_A$) qui détermine le choix et la pondération des points d'image de la première image ($A_3$), on génère pour chaque phase d'interpolation un deuxième masque filtrant ($W_B$) qui détermine le choix et la pondération des points d'image de la deuxième image ($A_3$), et on choisit les masques filtrants générés en fonction de la phase d'interpolation momentanée pour la filtration médiane.

**7.** Procédé selon la revendication 6,
**caractérisé en ce que**

les masques filtrants ($W_a$, $W_B$) sont configurés pour que des points d'image centraux choisis par les masques filtrants soient plus fortement pondérés que les points d'image environnants, la somme des pondérations centrales étant supérieure à la somme des autres pondérations.

**8.** Procédé selon la revendication 6 ou 7,
**caractérisé en ce qu'**
on choisit les masques filtrants ($W_A$, $W_B$) pour que le nombre des points d'image, respectivement pris en compte par les masques filtrants des images ($A_3$, $B_3$), de la première séquence d'images ($A_1$, $B_1$, $A_2$, $B_2$, $A_3$, $B_3$, ...) soit d'autant plus grand que le facteur de projection ($p_{gauche}$, $p_{droit}$) respectif est faible, le facteur de projection étant respectivement la distance temporelle, normalisée à la distance temporelle entre la première et la deuxième image ($A_3$, $B_3$), entre l'image interpolée ($\zeta_1$) et la première image ($A_3$), ou entre l'image interpolée ($\zeta_1$) et la deuxième image ($B_3$).

**9.** Procédé selon l'une des revendications 6 à 8,
**caractérisé en ce que**
on choisit les masques filtrants ($W_A$, $W_B$) pour que la majorité des pondérations de filtrage se trouve dans celui des deux masques filtrants qui est associé au facteur de projection ($p_{gauche}$, $p_{droit}$) le plus faible.

**10.** Procédé selon l'une des revendications 6 à 9,
**caractérisé en ce que**
pour chaque phase d'interpolation, plus d'un premier masque filtrant et plus d'un deuxième masque filtrant conviennent respectivement pour une filtration de zones d'image différemment structurées, et les masques filtrants sont choisis en fonction d'une détection des zones d'images de ce type.

**11.** Procédé selon l'une des revendications 6 à 10,
**caractérisé en ce que**
pour chaque phase d'interpolation, plus d'un premier masque filtrant et plus d'un deuxième masque filtrant conviennent respectivement pour une filtration en relation avec des vecteurs de déplacement de fiabilité différente, les masques filtrants étant choisis en fonction d'une fiabilité estimée du vecteur de déplacement.

**12.** Procédé selon l'une des revendications précédentes,
**caractérisé en ce que**
des points d'image déjà générés de l'image interpolée ($\zeta_1$) de la deuxième séquence d'images ($\alpha_1$, $\beta_1$, $\gamma_1$, $\delta_1$, $\varepsilon_1$, $\zeta_1$) sont amenés également au filtre médian.

**13.** Procédé selon l'une des revendications précédentes,
**caractérisé en ce que**
le premier signal d'image est décomposé au moyen d'une séparation linéaire ou non linéaire de bande en au moins deux signaux de bande partielle, et le procédé est appliqué à chacun des signaux de bande partielle.

**14.** Procédé selon l'une des revendications précédentes,
**caractérisé en ce que**
le premier signal vidéo est un signal de saut de ligne.

**15.** Procédé selon l'une des revendications 1 à 13,
**caractérisé en ce que**
le premier signal vidéo est un signal progressif.

**16.** Utilisation du procédé selon l'une des revendications précédentes pour générer un signal synthétique de chrono-loupe.

**17.** Dispositif de conversion, appuyée sur un vecteur de déplacement, d'un premier signal vidéo (Sin) qui contient une première séquence d'images ($A_1$, $B_1$, $A_2$, $B_2$, $A_3$, $B_3$, ...) ayant une première fréquence ($f_{org}$), en un deuxième signal vidéo (Sout) qui contient une deuxième séquence d'images ($\alpha_1$, $\beta_1$, $\gamma_1$, $\delta_1$, $\varepsilon_1$, $\zeta_1$) ayant une deuxième fréquence ($f_{int}$),
**caractérisé par**

- des moyens pour l'estimation du déplacement (20 ; 201, 202), qui fournissent un premier vecteur de déplacement ($v_x$, $v_y$),

- un dispositif d'interpolation (10 ; 101, 102) comportant un filtre médian configuré pour former des images de la deuxième séquence d'images ($\alpha_1$, $\beta_1$, $\gamma_1$, $\delta_1$, $\varepsilon_1$, $\zeta_1$), qui sont en décalage de phase par rapport à la première séquence d'images ($A_1$, $B_1$, $A_2$, $B_2$, $A_3$, $B_3$, ...) de sorte que, pour un point d'image d'une image ($\zeta_1$) de la deuxième séquence d'images ($\alpha_1$, $\beta_1$, $\gamma_1$, $\delta_1$, $\varepsilon_1$, $\zeta_1$), des points d'image d'au moins une première image ($A_3$) et d'une deuxième image ($B_3$) de la première séquence d'images ($A_1$, $B_1$, $A_2$, $B_2$, $A_3$, $B_3$, ...) sont filtrés,

- des moyens (30 ; 301, 302) pour fournir un facteur de projection ($p_{gauche}$, $p_{droit}$), le facteur de projection étant respectivement la distance temporelle, normalisée à la distance temporelle entre la première et la deuxième image ($A_3$, $B_3$), entre l'image ($\zeta_1$) et la première image ($A_3$), ou entre l'image ($\zeta_1$) et la deuxième image ($B_3$), et

- une unité de choix de masque filtrant (40 ; 401, 402), couplée au dispositif d'interpolation, et recevant au moins le facteur de projection ($p_{gauche}$) en tant que signal d'entrée et qui fournit au dispositif d'interpolation (10 ; 101, 102) des masques filtrants en fonction des signaux d'entrée.

**18.** Dispositif selon la revendication 17, qui présente une unité de projection de vecteur, recevant un facteur de projection ($p_{gauche}$) et un vecteur de déplacement ($v_x$, $v_y$) et qui fournit un vecteur de déplacement ($vp_x$, $vp_y$) projeté, amené à l'unité de choix de masque filtrant (40 ; 401, 402).

**19.** Dispositif selon la revendication 17 ou 18, **caractérisé par**

- des moyens de séparation de bande (60 ; 601, 602), qui fournissent au moins un premier signal de bande et au moins un deuxième signal de bande à partir du premier signal vidéo (Sin),

- un premier dispositif d'interpolation (101) relié à une première unité de choix de masque filtrant (401) et un deuxième dispositif d'interpolation (102) relié à une deuxième unité de choix de masque filtrant (402), et l'au moins un premier signal de bande est amené au premier dispositif d'interpolation (101) et au moins un deuxième signal de bande est amené au deuxième dispositif d'interpolation (102),

- un combinateur (70) recevant un signal de sortie du premier dispositif d'interpolation (101) et un signal de sortie du deuxième dispositif d'interpolation (102) et qui génère le deuxième signal vidéo (Sout) à partir du signal de sortie du premier dispositif d'interpolation (101) et du signal de sortie du deuxième dispositif d'interpolation (102).

## Tiefenkanal

## Höhenkanal

FIG. 1

Originalhalbbild A
(0 ms)

Originalhalbbild B
(20 ms)

Uminterpolation:

7 Taps          7 Taps

6 X [ ] + [ ] + [ ] 6 X

Ordnung der Elemente in steigender Reihenfolge

26-Tap-Medianfilter:

?

Interpoliertes Zwischenbild
in der Rasterlage B (10ms)

FIG. 2

Originalbildfolge (Höhen):

Z      A      B      C      D

Direkte Übernahme    Median aus 5    Median aus 3    Median aus 5    Direkte Übernahme

Z'    ZA    A    AB    B'    BC    C    CD    D'

-20 ms   -10 ms   0 ms   10 ms   20 ms   30 ms   40 ms   50 ms   60 ms

Interpolierte 100 Hz Halbbildfolge (Höhen)

**FIG. 3**

$T_{-10ms}$    Halbbild $A_n$      $T_{+10ms}$    Halbbild $B_n$

$\dfrac{\overline{V_{A_nB_n}}}{2}$

**Interpolations Filter**

$T_0$    Zwischenbild $\beta_n$

**FIG. 4**

Halbbild $A_n$   T-10ms   Gewichtungs-Masken   T+10ms   Halbbild $B_n$

$\overrightarrow{V}_{A_n B_n}$ / 2

$W_{A_n}$

$W_{B_n}$

$N_3$

$N_2$

$N_1$

Gewichteter Median

rekursive Elemente

$T_0$

$\overrightarrow{V}_{A_n B_n}$ / 2

Zwischenbild $\beta_n$

FIG. 5

Fehlvektoren ··· 0 0 0 0 0 0 0 0 0 0 0 0 0 0 0 0 ···

Halbbild $A_n$ ···

Zwischenbild $\beta_n$ ···

$x - x_0$

$V_{xmess} = 0$

$L_x$

Halbbild $B_n$ ···

$\Delta_x$

$V_{xreal} = 4$

$x_0$   $x$   $x_1$

FIG. 6

FIG. 7

Maske aus Bild B$_n$

Maske aus Bild A$_n$

$\vec{V}_{A_n B_n}$

w$_{B_n}$

w$_{A_n}$

w$_{\beta_n}$

rekursives Element

FIG. 8

| | 1 | |
|---|---|---|
| 1 | 3 | 1 |
| | 1 | |

a)

| 1 | 2 | 1 |
|---|---|---|
| 1 | 2 | 1 |

b)

FIG. 9

FIG. 10

**Originalbild A**

**Originalbild B**

**Zwischenbild** $\xi$

Fehlerbereich im Bild $A_n$

Fehlerbereich im Bild $B_n$

$\dfrac{5}{6}$ $\cdot V_{mess}$

$\dfrac{1}{6}$ $\cdot V_{mess}$

*FIG. 11*

$p_{links}=1/6$, $p_{rechts}=5/6$, $V_{mess}=0$

Bild A
$\longrightarrow$ X

| 1 | | | | | | |

$W_A$

Zwischenbild $\xi$
$\longrightarrow$ X

| 1 | 1 | 1 | 7 | 1 | 1 | 1 |

$W_B$

Bild B
$\longrightarrow$ X

*FIG. 12*

$p_{links}=1/6$, $p_{rechts}=5/6$, $v_{mess}=0$

Bild A

$W_A$

Zwischenbild ξ

$x_0$

$W_B$

Bild B

FIG. 13

$S_{in}$
$f_{org}$  Eingangsbilddaten

30  $p_{links}$

50
Vektorprojektion  $VP_x$
$VP_y$

$v_x$  $v_y$

20
Bewegungsschätzung

$S(n)$

Bildspeicher  50

$S(n-1)$

80  $S_{80}$

$p_{links}$
$VP_x$  Filter-
$VP_y$  maskenauswahl  40
$S_{80}$

10
adaptiver
Interpolator

$S_{out}$
$f_{int}$
Ausgangsbilddaten

FIG. 14

FIG. 15

**Originalhalbbild S(n-2)**

**Originalhalbbild S(n-1)**

**Zwischenbild S(Z)**

FIG. 16

FIG. 17

FIG. 18

## Originalhalbbild

Zeile

0
(0,5)
1
(1,5)
2
(2,5)
3

a) (3,5)

## Originalhalbbild

Zeile

0
(0,5)
1
(1,5)
2
(2,5)
3

b) (3,5)

**F/G. 19**

**Originalbild S(n-2)**

Zeile
0
1
2
3

:

2R-1

**Originalbild S(n-1)**

Zeile
0
1
2
3

:

2R-1

**Zwischenbild S(Z)**

Zeile
0
1
2
3

:

2R-1

**F/G. 20**